# EUROPÄISCHE PATENTANMELDUNG

(11) **EP 2 133 715 A1**
(43) Veröffentlichungstag der Anmeldung: **16.12.2009**
(21) Anmeldenummer: 08104381.2
(22) Anmeldetag: 11.06.2008
(51) Int. Cl.: G02B 6/08

(54) **Vorrichtung und Verfahren zum Ablenken einer elektromagnetischen Strahlung, insbesondere eines Laserstrahls**

(71) Anmelder: Pantec Biosolutions AG, 9494 Ruggell (LI)
(72) Erfinder: Bragagna, Thomas, A-6805 Feldkirch-Gisingen (AT); Gross, Simon, A-6844 Altach (AT); Gross, Anton, A-6842 Koblach (AT); Busse-Grawitz, Max Erick, CH-6055 Alpnach Dorf (CH); Fengels, Dirk, CH-6006 Luzern (CH)
(74) Vertreter: Dr. Graf & Partner

(57) **Zusammenfassung**

Die Ablenkvorrichtung (1) zum Ablenken einer elektromagnetischen Strahlung, insbesondere eines Laserstrahls, umfasst eine Antriebsvorrichtung (2), und umfasst eine Strahlablenkungsvorrichtung (4), insbesondere einen Spiegel (4), welche mit der Antriebsvorrichtung (2) derart angeordnet ist, dass die Antriebsvorrichtung (2) die Ausrichtung der Strahlablenkungsvorrichtung (4) bestimmt, und umfasst eine Reibungsvorrichtung (5), welche derart angeordnet und ausgestaltet ist, dass diese eine Haft- beziehungsweise eine Gleitreibung auf die beweglich gelagerte Strahlablenkungsvorrichtung (4) bewirkt, wobei die Antriebsvorrichtung (2) derart ausgestaltet ist, dass diese eine Antriebskraft zu erzeugen vermag, welches die Haftreibung überwindet, und umfasst eine Ansteuerungsvorrichtung (10) zur Ansteuerung der Antriebsvorrichtung (2).

## Beschreibung

Die Erfindung betrifft eine Vorrichtung zum Ablenken einer elektromagnetischen Strahlung, insbesondere eines Laserstrahls gemäss dem Oberbegriff von Anspruch 1. Die Erfindung betrifft zudem ein Verfahren zum Ablenken einer elektromagnetischen Strahlung, insbesondere eines Laserscanners gemäss dem Oberbegriff von Anspruch 11.

### Stand der Technik

Die Druckschrift WO 2006/111526 offenbart eine Laservorrichtung umfassend einen gepulsten Laser sowie eine Ablenkvorrichtung zum Ablenken des Laserstrahls. Der gepulste Laser sowie die Ablenkvorrichtung werden derart gegenseitig angesteuert, dass der Laserstrahl in definierte Richtungen abgelenkt wird, beziehungsweise dass der Laserstrahl an diskreten Stellen auf eine Oberfläche auftrifft. Bisher bekannte Ablenkvorrichtungen sind zwar schnell, jedoch aufwändig bezüglich Mechanik, Elektronik oder Sensorik und somit sehr teuer.

### Darstellung der Erfindung

Aufgabe der vorliegenden Erfindung ist es ein Ablenkvorrichtung für elektromagnetische Strahlen zu bilden, die schnell betreibbar ist, und die insbesondere auch kostengünstig herstellbar ist.

Diese Aufgabe wird gelöst mit einer Ablenkvorrichtung aufweisend die Merkmale von Anspruch 1. Die Unteransprüche 2 bis 10 betreffen weitere, vorteilhaft ausgestaltete Ablenkvorrichtungen.
Die Aufgabe wird insbesondere gelöst mit einer Ablenkvorrichtung zum Ablenken einer elektromagnetischen Strahlung, insbesondere eines Laserstrahls, wobei die Ablenkvorrichtung eine Antriebsvorrichtung mit einem Stator und einem bezüglich des Stators drehbar gelagerten Rotor umfasst, sowie eine Strahlablenkungsvorrichtung, insbesondere einen Spiegel, welche mit der Rotor derart verbunden ist, dass der Drehwinkel des Rotors die Ausrichtung der Strahlablenkungsvorrichtung bestimmt. Die Ablenkvorrichtung umfasst zudem eine Reibungsvorrichtung, welche derart angeordnet und ausgestaltet ist, dass diese eine Haftbeziehungsweise eine Gleitreibung auf den drehbar gelagerten Rotor bewirkt, wobei die Antriebsvorrichtung derart ausgestaltet ist, dass diese eine Antriebsmoment zu erzeugen vermag, welches die Haftreibung überwindet, und wobei die Ablenkvorrichtung eine Ansteuerungsvorrichtung zur Ansteuerung der Antriebsvorrichtung umfasst.

Die Aufgabe wird weiter gelöst mit einem Verfahren zum Ablenken elektromagnetischer Strahlen aufweisend die Merkmale von Anspruch 11. Die Unteransprüche 12 bis 19 betreffen weitere, vorteilhafte Verfahrensschritte. Die Aufgabe wird insbesondere gelöst mit einem Verfahren zum Ablenken einer elektromagnetischen Strahlung, insbesondere eines Laserstrahls, mit einer drehbar gelagerten Strahlablenkungsvorrichtung, insbesondere eines Spiegels, wobei die Strahlablenkungsvorrichtung von einem Rotor einer Antriebsvorrichtung angetrieben wird, wobei eine Haftbeziehungsweise Gleitreibung auf den Rotor bewirkt wird, und wobei die Antriebsvorrichtung mit Hilfe eines Startpulses bewegt wird, und wobei die Haft- und Gleitreibung, die Amplitude der Startpulse sowie die Zeitdauer zwischen zwei aufeinanderfolgenden Startpulsen derart gegenseitig angepasst sind, dass die Antriebsvorrichtung sowie der Spiegel zwischen zwei aufeinanderfolgenden Startpulsen zum Stillstand kommt. Unter einem Startpuls wird ein Ansteuersignal für die Antriebsvorrichtung verstanden, welches zur Folge hat, dass die Strahlablenkungsvorrichtung ausgehend von einem Stillstand in Bewegung versetzt wird.

Bisher bekannte Ablenkungsvorrichtungen zur Ablenkung eines Laserstrahls verwenden üblicherweise einen Spiegel, welcher möglichst reibungslos gelagert ist, um die Auslenkung des Spiegels mit hoher Geschwindigkeit zu betreiben. Im Gegensatz dazu umfasst die erfindungsgemäße Ablenkvorrichtung eine Reibungsvorrichtung, welche dazu bestimmt ist eine Haftreibung beziehungsweise eine Gleitreibung auf die beweglichen Teile der Ablenkvorrichtung, insbesondere den drehbar gelagerten Rotor oder die Strahlablenkungsvorrichtung auszuüben. Die Teil der Ablenkvorrichtung bildende Reibungsvorrichtung weist den Vorteil auf, dass die Antriebsvorrichtung mit kurzen Pulsen betrieben werden kann, wobei die Pulse, beispielsweise ein Startpuls, eine derartige Amplitude und eine derartige Zeitdauer aufweist, dass ausgehend von einer stillstehenden Antriebsvorrichtung in einer ersten Phase die Haftreibung überwunden wird, so dass sich der Rotor bewegt, und dass der sich bewegene Rotor in einer zweiten Phase aufgrund der einwirkenden Gleitreibung der Reibungsvorrichtung wieder zum Stillstand gelangt. In einer vorteilhaften Ausgestaltung bewirkt die Reibungsvorrichtung eine derartige Haftreibung und Gleitreibung, dass sich der Rotor in definierten Schritten bewegt, beziehungsweise dass der Rotor sich um einen reproduzierbar definiert Winkel dreht, bis der Rotor wieder still steht. Nebst der Haft- und Gleitreibung wird vorzugsweise auch der auf die Antriebsvorrichtung wirkende Strompuls, insbesondere dessen Amplitude, Zeitdauer und/oder zeitlicher Verlauf, derart ausgewählt, dass sich der Rotor um einen reproduzierbaren, definierten Winkel dreht. Die erfindungsgemäße Ablenkvorrichtung weist den Vorteil auf, dass die Strahlablenkungsvorrichtung, vorteilhafter Weise als Spiegel ausgestaltet, sehr schnell schrittweise bewegt werden kann, indem der Spiegel kurzfristig bewegt wird, und danach während einer kurzen Zeitdauer stillsteht.

Die erfindungsgemäße Ablenkvorrichtung lässt sich besonders vorteilhaft in Kombination mit einem gepulsten Laser verwenden, indem ein Laserstrahl jeweils bei still stehendem Spiegel abgegeben wird, sodass die Auslenkung des Spiegels die Richtung des abgelenkten Laserstrahls bestimmt, und der Laser beispielsweise an einer definierten Positionen auf eine Oberfläche auftritt.

Die erfindungsgemäße Ablenkvorrichtung weist den Vorteil auf, dass diese mit hoher Geschwindigkeit betreibbar ist, indem diese beispielsweise zumindest 500 Startpulse pro Sekunde erzeugt, was zur Folge hat, dass der Spiegel 500 mal pro Sekunde um einen Winkel Δα gedreht wird, und nach jedem einzelnen Startpuls danach wieder zum Stillstand gelangt. Wird diese Ablenkvorrichtung mit einem gepulsten oder einem kontinuierlich strahlenden Laser kombiniert, so kann der Laser somit innerhalb einer Sekunde nacheinander folgend beispielsweise auf 500 unterschiedliche Positionen einer Oberfläche gelenkt werden. Während des Stillstandes des Spiegels besteht die Möglichkeit einen einzigen Laserpuls oder auch eine Mehrzahl nacheinander folgender Laserpulse dem Spiegel zuzuleiten, und durch diesen in dieselbe Richtung ablenken zu lassen, sodass dieselbe Stelle vom Laserstrahl mehrmals getroffen wird. In einem vorteilhaften Betriebsverfahren erfolgen die Startpulse in regelmässigen Zeitabständen. Die Zeitabstände zwischen zwei Startpulsen können jedoch, falls erforderlich, auch in unregelmässigen Zeitabständen erfolgen, beispielsweise wenn ein geschlossener Regelkreis, auch als closed-loop bezeichnet, verwendet wird, und die Startpulse basierend auf einem gemessenen Istwert aktiviert werden.

In einer vorteilhaften Ausgestaltung wird der Rotor nicht nur von einem Startpuls angetrieben, sondern es können zudem noch weitere Pulse wie beispielsweise ein Stopppuls verwendet werden, um die Bewegungen des Rotors definiert zu bremsen.

In einer vorteilhaften Ausgestaltung wird die Ablenkvorrichtung als offener Regelkreis betrieben, auch als open-loop oder Feed-Forward bezeichnet, indem die Stellung des Spiegels nicht kontinuierlich erfasst wird, sondern beispielsweise erst nach einer definierten Anzahl Pulsen, oder erst dann wenn der Spiegel in einen Anschlag läuft. Die erfindungsgemäße Ablenkvorrichtung weist den Vorteil auf, dass der durch einen Startpuls bewirkte Drehwinkel Δα des Rotors relativ genau ermittelt werden kann und zudem relativ genau reproduzierbar ist, so dass die Ablenkvorrichtung auch in einem offenen Regelkreis beziehungsweise in einem open-loop-Betrieb beziehungsweise einem Feed-Forward-Betrieb sehr genau betreibbar ist, indem auf Grund der Anzahl auf die Ablenkvorrichtung ausgeübter Startpulse der Drehwinkel des Rotors beziehungsweise der Drehwinkel des Spiegels relativ genau berechnet werden kann. Die Ansteuerung kann zudem voll digital erfolgen.

Die erfindungsgemäße Ablenkvorrichtung weist den weiteren Vorteil auf, dass diese sehr kostengünstig herstellbar ist. Als Antriebsvorrichtung wird vorzugsweise ein standardmässig verfügbarer Motor verwendet, wobei eine zusätzliche Reibungsvorrichtung erforderlich ist, um die erforderliche Reibung zu erzeugen. Die erfindungsgemäße Ablenkvorrichtung weist den weiteren Vorteil auf, dass diese sehr klein und leicht ausgestaltet sein kann. Da die auf die Antriebsvorrichtung ausgeübten Strompulse von sehr kurzer Zeitdauer sind kann die Antriebsvorrichtung mit Stromspitzen betrieben werden, deren Amplitude zumindest das Zehnfache oder vorzugsweise auch das hundertfache oder mehr des Nennstroms der Antriebsvorrichtung beträgt. Dies ergibt wiederum den Vorteil, dass die Antriebsvorrichtung trotz der hohen Stromspitzen relativ klein ausgestaltet werden kann. Eine derartige Überlastung der Antriebsvorrichtung ist möglich, weil ein Strompuls von äusserst kurzer Dauer ist, vorzugsweise kürzer als 1 ms.

Die Erfindung wird nachfolgend anhand von Ausführungsbeispielen im Detail erläutert.

### Kurze Beschreibung der Zeichnungen

Die zur Erläuterung der Ausführungsbeispiele verwendeten Zeichnungen zeigen:
- Fig. 1: ein Ausführungsbeispiel einer Ablenkvorrichtung;
- Fig. 2: eine Ansicht der Ablenkvorrichtung gemäss Figur 1 aus Richtung A;
- Fig. 3: einen Schnitt durch die Ablenkvorrichtung gemäss Figur 1 entlang der Schnittlinie B-B;
- Fig. 4: ein Ausführungsbeispiel zur Ablenkung eines Laserstrahls in x- und y-Richtung;
- Fig. 5: schematisch eine Laservorrichtung umfassend einen Laser, eine Ablenkvorrichtung und weitere Ansteuerungsvorrichtungen;
- Fig. 6: eine Schrittantwort eines Spiegels ohne Reibungsvorrichtung;
- Fig. 7: ein Beispiel eines Ansteuerungssignals für die Antriebsvorrichtung;
- Fig. 8: eine Schrittantwort eines Spiegels mit Reibungsvorrichtung und mit einem Ansteuerungssignal bestehend aus einem einzigen Puls;
- Fig. 9: eine Schrittantwort eines Spiegels mit Reibungsvorrichtung und mit dem in Figur 7 dargestellten Ansteuerungssignal;
- Fig. 10: eine Oberfläche, in welcher die Stellen dargestellt sind, bei welchen der Laserstrahl die Oberfläche trifft;
- Fig. 11: Drehwinkelstellungen des Spiegels zwischen zwei Anschlägen;
- Fig. 12a: ein Ausführungsbeispiel einer Ablenkvorrichtung mit in x- und y-Richtung beweglichem Spiegel;
- Fig. 12b: einen Schnitt entlang der Schnittlinie C-C;
- Fig. 12c: eine Untenansicht der Ablenkvorrichtung gemäß Fig.12a;
- Fig. 13a: ein weiteres Ausführungsbeispiel einer Ablenkvorrichtung mit in x- und y-Richtung beweglichem Spiegel;
- Fig. 13b: einen Schnitt entlang der Schnittlinie D-D;
- Fig. 13c: eine perspektivische Ansicht der Ablenkvorrichtung gemäß Fig.13a;
- Fig. 14a: ein weiteres Ausführungsbeispiel einer Ablenkvorrichtung mit in x- und y-Richtung beweglichem Spiegel;
- Fig. 14b: eine Untenansicht des beweglichen Spiegels;
- Fig. 14c: eine Draufsicht des beweglichen Spiegels;
- Fig. 14d: einen Schnitt entlang der Schnittlinie E-E;
- Fig. 14e: einen Schnitt entlang der Schnittlinie F-F;
- Fig. 14f: einen Seitenansicht von Rechts gemäss Figur 14c;
- Fig. 15a: ein weiteres Ausführungsbeispiel einer Ablenkvorrichtung mit in x- und y-Richtung beweglichem Spiegel;
- Fig. 15b: eine Seitenansicht der Figur 15a von unten;
- Fig. 15c: einen Schnitt entlang der Schnittlinie G-G;
- Fig. 15d: einen Schnitt entlang der Schnittlinie H-H;
- Fig. 15e: einen Schnitt entlang der Schnittlinie I-I;
- Fig. 16a: ein weiteres Ausführungsbeispiel einer Ablenkvorrichtung mit in x- und y-Richtung beweglichem Spiegel;
- Fig. 16b: eine Draufsicht des beweglichen Spiegels;
- Fig. 16c: eine Untenansicht des beweglichen Spiegels;
- Fig. 16d: eine Draufsicht der Ablenkvorrichtung;
- Fig. 16e: einen Schnitt entlang der Schnittlinie K-K;
- Fig. 16f: eine Seitenansicht der Figur 16d von unten;
- Fig. 16g: einen Schnitt entlang der Schnittlinie L-L;
- Fig. 16h: einen Schnitt entlang der Schnittlinie M-M;
- Fig. 17a: ein weiteres Ausführungsbeispiel einer Ablenkvorrichtung mit in x- und y-Richtung beweglichem Spiegel;
- Fig. 17b: einen Schnitt entlang der Schnittlinie N-N;
- Fig. 17c: eine Seitenansicht der Ablenkvorrichtung gemäss Figur 17a;
- Fig. 17d: eine perspektivische Ansicht der Ablenkvorrichtung gemäss Figur 17a;
- Fig. 18a: ein weiteres Ausführungsbeispiel einer Ablenkvorrichtung mit in x- und y-Richtung beweglichem Spiegel;
- Fig. 18b: einen Schnitt entlang der Schnittlinie O-O;
- Fig. 18c: eine Seitenansicht der Ablenkvorrichtung gemäss Figur 18a;
- Fig. 18d: einen Schnitt entlang der Schnittlinie P-P;
- Fig. 19a: ein weiteres Ausführungsbeispiel einer Ablenkvorrichtung mit in x- und y-Richtung beweglichem Spiegel;
- Fig. 19b: einen Schnitt entlang der Schnittlinie Q-Q;
- Fig. 19c: eine Untenansicht der Ablenkvorrichtung gemäss Figur 19a;
- Fig. 19d: ein Detail einer Reibungsvorrichtung der Ablenkvorrichtung gemäss Figur 19a;
- Fig. 20a: ein weiteres Ausführungsbeispiel einer Ablenkvorrichtung mit in x- und y-Richtung beweglichem Spiegel;
- Fig. 20b: einen Schnitt entlang der Schnittlinie R-R;
- Fig. 20c: eine Seitenansicht der Ablenkvorrichtung gemäss Figur 20a;
- Fig. 20d: eine perspektivische Untenansicht der Ablenkvorrichtung gemäss Figur 20a;
- Fig. 21a: ein weiteres Ausführungsbeispiel einer Ablenkvorrichtung mit in x- und y-Richtung beweglichem Spiegel;
- Fig. 21b: einen Schnitt entlang der Schnittlinie S-S;
- Fig. 21c: eine Seitenansicht der Ablenkvorrichtung gemäss Figur 21a;
- Fig. 21d: eine perspektivische Untenansicht der Ablenkvorrichtung gemäss Figur 21a;
- Fig. 22a: ein weiteres Ausführungsbeispiel einer Ablenkvorrichtung mit in x- und y-Richtung beweglichem Spiegel;
- Fig. 22b: einen Schnitt entlang der Schnittlinie T-T;
- Fig. 22c: eine Seitenansicht der Ablenkvorrichtung gemäss Figur 22a;
- Fig. 22d: eine perspektivische Untenansicht der Ablenkvorrichtung gemäss Figur 22a;
- Fig. 23a: ein weiteres Ausführungsbeispiel einer Ablenkvorrichtung mit in x- und y-Richtung beweglichem Spiegel;
- Fig. 23b: einen Schnitt entlang der Schnittlinie U-U;
- Fig. 23c: eine Seitenansicht der Ablenkvorrichtung gemäss Figur 23a;
- Fig. 23d: eine perspektivische Untenansicht der Ablenkvorrichtung gemäss Figur 23a;
- Fig. 24a, 24b: Beispiele von Vorrichtungen zum Erfassen der Stellung der Ablenkvorrichtung;
- Fig. 25: ein weiteres Ausführungsbeispiel einer Ablenkvorrichtung mit in x- und y-Richtung beweglichem Spiegel und einem Linearantrieb.

Grundsätzlich sind in den Zeichnungen gleiche Teile mit gleichen Bezugszeichen versehen.

### Wege zur Ausführung der Erfindung

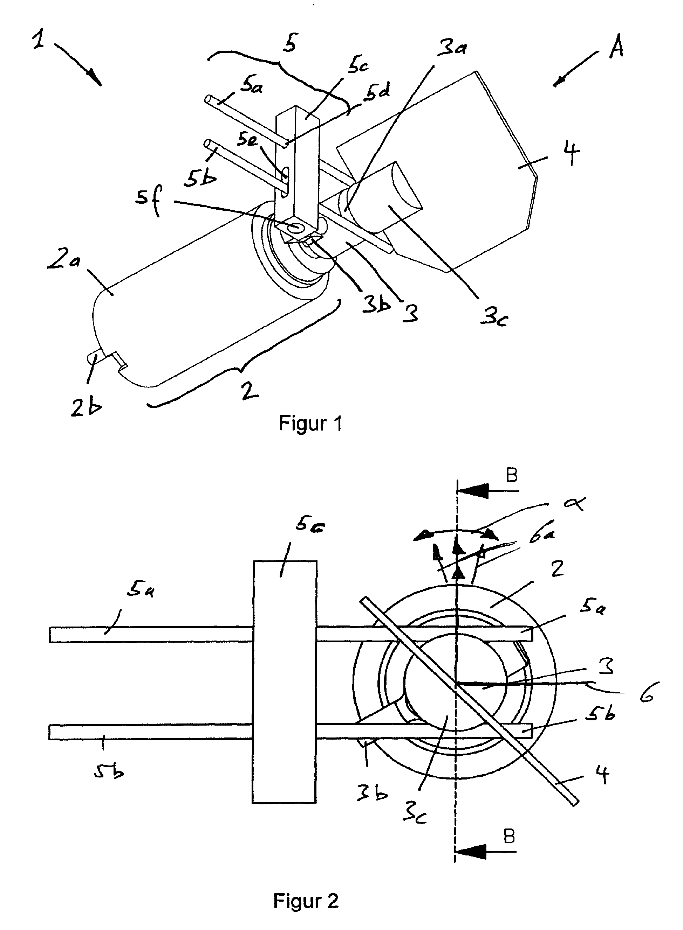

Fig. 1 zeigt ein Ausführungsbeispiel einer Ablenkvorrichtung 1 umfassend eine als Motor ausgestattete Antriebsvorrichtung 2, wobei der Motor aus einem Stator 2a und einem bezüglich des Stators 2a drehbar gelagerten Rotor 2b besteht. Eine Strahlablenkungsvorrichtung 4, ausgestaltet als drehbarer Spiegel, ist über das Verbindungsteil 3 fest mit dem Rotor 2b verbunden. Das Verbindungsteil 3 umfasst einen Befestigungsabschnitt 3c für den Spiegel 4, und umfasst zudem einen zylinderförmigen Abschnitt 3d aufweisend eine Nut 3a. Zwischen der Antriebsvorrichtung 2 und dem Spiegel 4 ist eine Reibungsvorrichtung 5 angeordnet, welche eine Haftreibung beziehungsweise eine Gleitreibung auf das Verbindungsteil 3 ausübt. Im dargestellten Ausführungsbeispiel umfasst die Reibungsvorrichtung 5 zwei Drähte 5a, 5b, welche in einem Halteteil 5c derart gehalten sind, dass die beiden Drähte 5a, 5b auf gegenüberliegenden Seiten in der Nut 3a des Verbindungsteils 3 anliegen. Im dargestellten Ausführungsbeispiel umfasst das Halteteil 5c eine schlitzförmige Bohrung 5e sowie eine Schraube 5f. Die von den beiden Drähten 5a, 5b auf die Nut 3a ausgeübte Kraft, und somit auch die dadurch bewirkte Haft- und Gleitreibung, kann über die Schraube 5f eingestellt werden. Die Schraube 5f wird vorteilhafterweise derart eingestellt, dass, wenn dem Motor 2 ein vorgegebener Strompuls zugeführt wird, sich die Welle 2b um einen vorherbestimmten Drehwinkel Δα bewegt.

Figur 2 zeigt die in Figur 1 dargestellte Ablenkvorrichtung 1 aus Blickrichtung A. Der Spiegel 4 ist über das Verbindungsteil 3 drehbar mit der Antriebsvorrichtung 2 verbunden. Gut sichtbar sind auch das Halteteil 5c sowie die Drähte 5a, 5b der Reibungsvorrichtung 5, wobei die Drähte 5a, 5b unter Vorspannung gegenüberliegend am Verbindungsteil 3 anliegen. Das Verbindungsteil 3 weist in der dargestellten Ausführungsform ein Anschlagteil 3b auf, das an einen nicht dargestellten Anschlag anschlagen kann, um das Verbindungsteil 3 vorzugsweise in eine definierte Ausgangsposition zu bringen. Ein Laserstrahl 6 fällt auf den Spiegel 4, und wird von diesem, wie durch die reflektierten Laserstrahlen 6a, 6b, 6c schematisch dargestellt, um einen Winkel α abgelenkt.

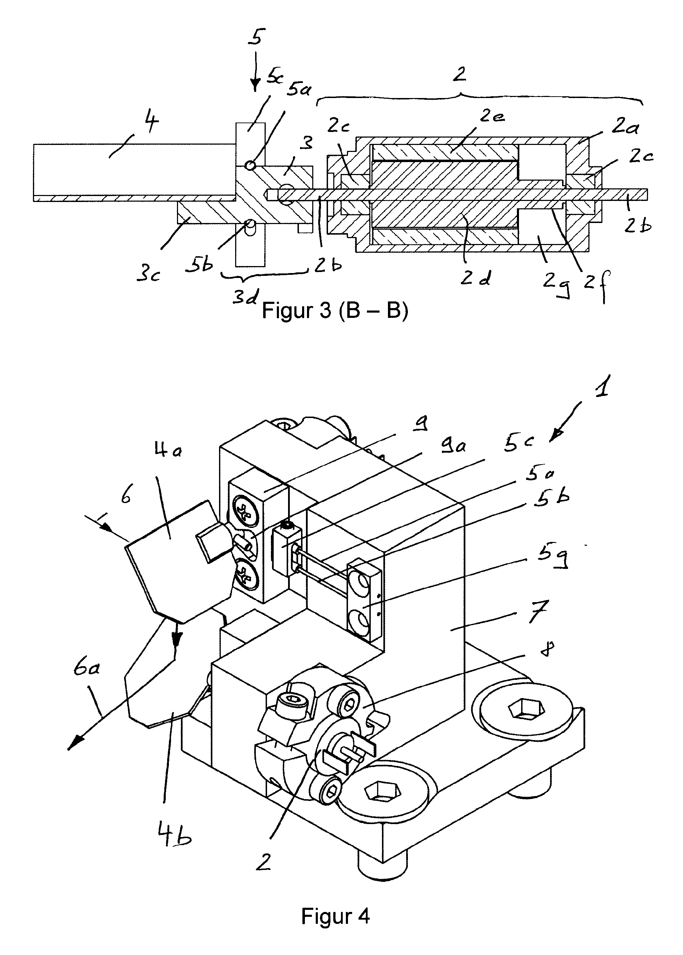

Figur 3 zeigt einen Längsschnitt durch die Ablenkvorrichtung 1 entlang des in Figur 2 dargestellten Schnittes B-B. Die als Elektromotor ausgestaltete Antriebsvorrichtung 2 umfasst einen Stator 2a mit Gehäuse und Statorwicklung 2e und Lagern 2c. Der Elektromotor 2 umfasst zudem einen Rotor 2b mit einer Welle sowie einen Permanentmagneten 2d. Der Elektromotor 2 umfasst zudem einen Kommutator 2f und Graphitbürsten 2g. Der Rotor 2b ist über das Verbindungsteil 3 mit dem Spiegel 4 verbunden. Die Antriebsvorrichtung 2 kann in einer Vielzahl von Möglichkeiten ausgestaltet sein, sodass die dargestellte Ausführungsform nur als ein Beispiel zu erachten ist. Der Elektromotor 2 könnte auch einen Stator 2a im Inneren aufweisen, sodass der Rotor 2b den Stator von aussen umgibt. Auch die Reibungsvorrichtung 5, welche eine Haftreibung beziehungsweise eine Gleitreibung auf die drehbar gelagerten Teile bewirkt, kann in einer Vielzahl von Möglichkeiten ausgestaltet sein. Die Reibungsvorrichtung 5 könnte auch in der Antriebsvorrichtung 2 integriert sein, indem die Reibungsvorrichtung 5 direkt auf den Rotor 2b wirkt. Im dargestellten Ausführungsbeispiel bewirkt die Reibungsvorrichtung 5 einen direkten, mechanischen Kontakt auf den Rotor 2b beziehungsweise auf die drehbar gelagerten Teile. Die Reibungsvorrichtung 5 könnte jedoch auch berührungslos, beispielsweise über induktive oder kapazitive Kräfte wirken.

Figur 4 zeigt ein weiteres Ausführungsbeispiel einer Ablenkvorrichtung 1, welche zwei der in den Figuren 1 bis 3 dargestellten Anordnungen aufweist, und somit über zwei drehbar gelagerte Spiegel 4a, 4b verfügt, wobei jeder Spiegel 4a, 4b von einem Motor 2 angetrieben ist. Im dargestellten Ausführungsbeispiel sind die Spiegel 4a, 4b derart bezüglich des Strahlengangs des Lasers 6 angeordnet, dass der abgelenkte Laserstrahl 6a in x- und y-Richtung abgelenkt wird. Aus Figur 4 ist zudem ein Anschlagteil 9 ersichtlich, welches eine Ausnehmung 9a aufweist, in welcher das Anschlagteil 3b des Verbindungsteils 3 zu liegen kommt. Durch diese Anordnung wird der maximal mögliche Drehwinkel des Verbindungsteils 3, und somit auch der maximal mögliche Drehwinkel des Spiegels 4 begrenzt.

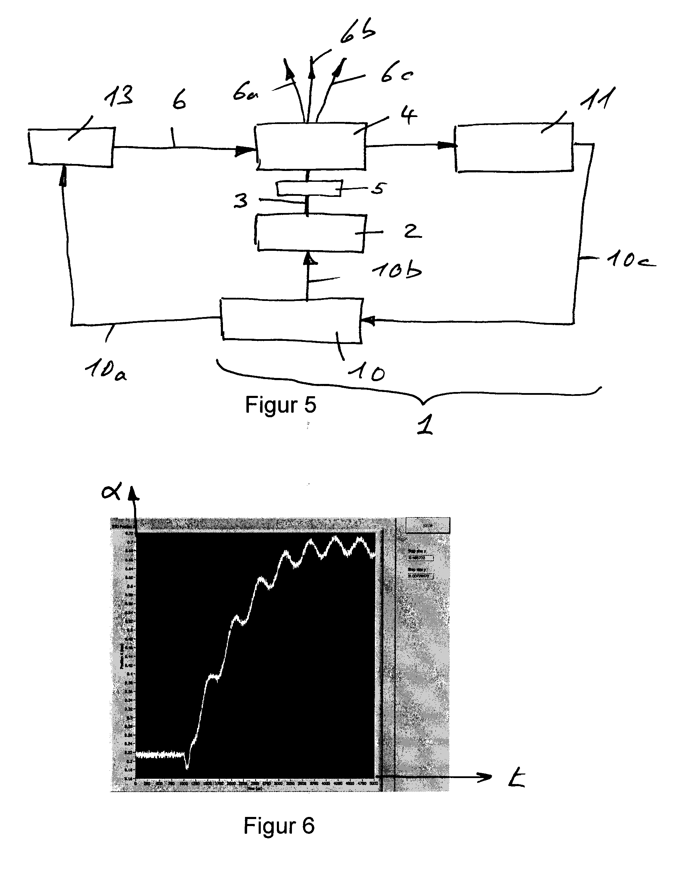

Figur 5 zeigt schematisch eine Ablenkvorrichtung 1 umfassend eine Antriebsvorrichtung 2, welche über ein Verbindungsteil 3 mit einer Strahlablenkungsvorrichtung 4 verbunden ist. Eine Reibungsvorrichtung 5 wirkt auf das Verbindungsteil 3. Eine Ansteuerungsvorrichtung 10 ist über Steuerleitungen 10b mit der Antriebsvorrichtung 2 verbunden, um diese anzusteuern, und um diese insbesondere mit Strompulsen zu versorgen. Ein Laser 13, welcher über die Steuerleitung 10a von der Ansteuerungsvorrichtung 10 ansteuerbar ist, erzeugt einen Laserstrahl 6, welcher durch den Spiegel 4 als unterschiedlich ausgerichtete Laserstrahlen 6a, 6b, 6c abgelenkt wird. Der Laserstrahl 6 ist vorzugsweise gepulst, wobei die Ansteuerungsvorrichtung 10 den Laser 13 und die Lage des Spiegels 4 vorzugsweise derart ansteuert, dass ein Laserstrahl 6 emittiert wird, wenn sich der Spiegel 4 in einer Ruhelage befindet. In der dargestellten Ausführungsform ist zudem eine Positionssensoren 11 vorgesehen, welcher die Stellung des Spiegels 4 erfasst, um die gemessene Position über die Steuerleitung 10c der Ansteuerungsvorrichtung 10 zuzuleiten. Diese Ausführungsform wird auch als geschlossener Regelkreis oder als "closed-loop" bezeichnet, da die Ansteuerungsvorrichtung 10 die Stellung des Spiegels 4 ansteuert, und dessen Position erfasst, so dass ein geschlossener Regelkreis ausgebildet ist.

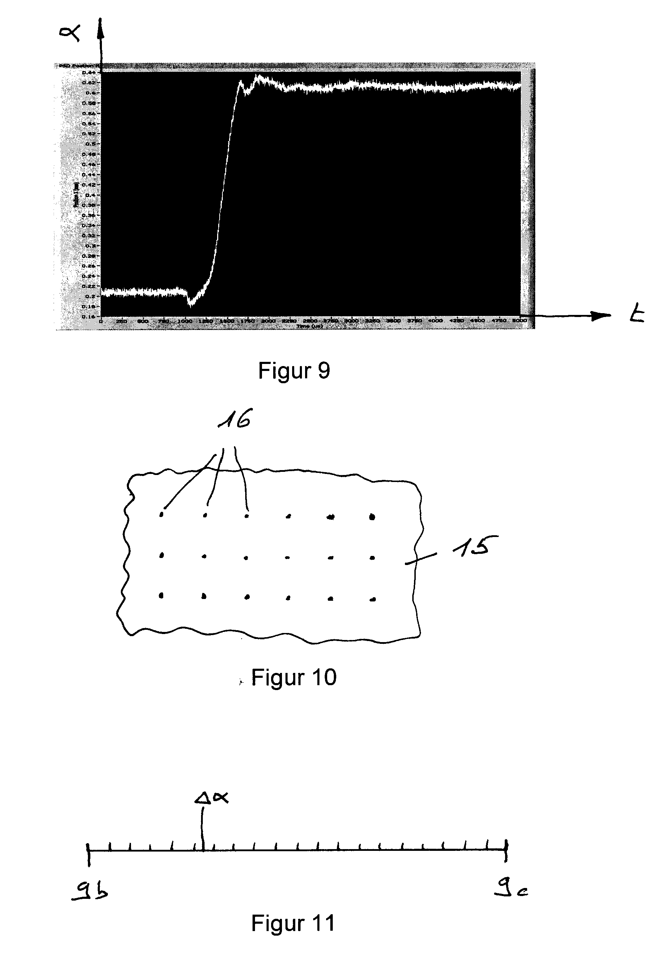

Auf den Positionssensor 11 könnte auch verzichtet werden, so dass die in Figur 5 dargestellte Ausführungsform eine "open-loop" Anordnung bildet. Wie in Figur 4 mit dem Anschlagteil 9 und dem Anschlagteil 3b dargestellt, könnte der maximale Drehwinkel des Spiegels 4 über eine Anschlagvorrichtung begrenzt sein. Figur 11 zeigt den linken und rechten Anschlag 9b, 9c, zwischen welchen mögliche Drehwinkelpositionen des Spiegels 4 als kleine Striche dargestellt sind, welche im dargestellten Ausführungsbeispiel gleichmässig um einen Winkel Δα gegenseitig beabstandet sind. Unter der Voraussetzung, dass es möglich ist zu bestimmen, wann der Drehwinkel des Spiegels 4 am linken beziehungsweise am rechten Anschlag 9b, 9c anschlägt, kann der dazwischen liegende Bereich auf einfache Weise von der Ansteuerungsvorrichtung 10 in einem open-loop beziehungsweise in einem Feed-Forward Betrieb angesteuert werden. Die Ansteuerungsvorrichtung 10 kann beispielsweise den Motor 2 mit einem konstanten Strompuls versorgen, wobei jeder Strompuls eine Drehung der Welle 2b um einen Winkel Δα bewirkt. Es kann nun gemessen werden wie viele Strompulse erforderlich sind, um den Spiegel 4 beziehungsweise die Welle 2b vom Anschlag 9b bis zum Anschlag 9c zu verfahren. Aus dem dadurch gesamthaft verfahrenen Winkel α sowie der Anzahl erforderlicher Strompulse kann somit berechnet werden, um welchen Winkel Δα die Welle 2b beziehungsweise der Spiegel 4 durch einen einzigen Strompuls bewegt wird. In Kenntnis dieses Winkel Δα kann die Ansteuerungsvorrichtung 10 in Abhängigkeit der Anzahl Strompulse den verfahrenen Drehwinkel der Welle 2b beziehungsweise des Spiegels 4 berechnen. Falls erforderlich kann auch der pro Strompuls verfahrene Winkel Δα verändert werden, indem die Parameter des Strompulses, insbesondere dessen Amplitude oder dessen Zeitdauer derart verändert wird, dass der pro Strompuls verfahrene Winkel Δα einem gewünschten Wert entspricht. Somit kann über die Ansteuerungsvorrichtung 10 eingestellt werden, welchen Winkel Δα ein Strompuls erzeugt. Ein derartiges Einstellen von Strompuls und Winkel Δα ist sowohl mit einer open-loop Anordnung als auch mit der in Figur 5 dargestellten closed-loop Anordnung möglich. In Figur 11 könnte der Gesamtwinkel zwischen linkem und rechtem Anschlag 9b, 9c beispielsweise 50° betragen, wobei beispielsweise 50 oder 500 Schritte erforderlich sind, um den Spiegel 4 vom linken zum rechten Anschlag 9b, 9c zu bewegen.

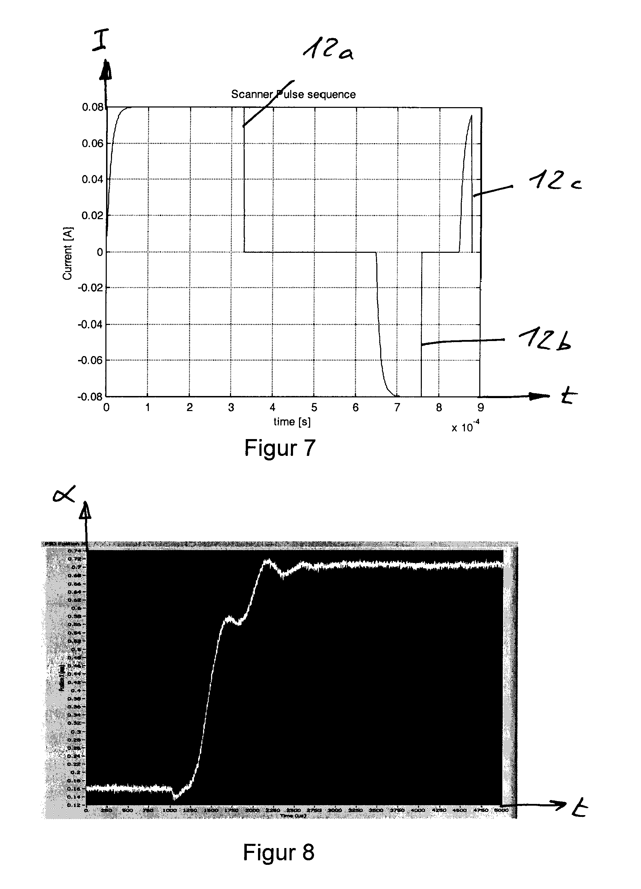

Figur 7 zeigt beispielhaft ein Strom-Zeit-Diagramm der Ansteuerung des Motors 2. Vorerst wird ein Startpuls 12a abgegeben, nach einer gewissen Zeit ein Stopppuls 12b, und danach noch ein Korrekturpuls 12c. Der zeitliche Verlauf der Strompulse sowie auch deren Amplitude kann aus einer Vielzahl von Möglichkeiten gewählt werden, um dadurch die Bewegung der Welle 2b spezifisch zu beeinflussen.

Nebst dem zeitlichen Verlauf des dem Motor 2 zugeführt Stroms ist insbesondere die Wirkungen der Reibungsvorrichtung zu berücksichtigen. Figur 6 zeigt die Drehbewegung der Welle 2b beziehungsweise des Spiegels 4 in Funktion der Zeit. Auf den Motor 2 wird ein einziger, in Figur 7 dargestellter Startpuls 12a abgegeben, sodass die Figur 6 die Schrittantwort auf den Startpuls 12a darstellt, wobei die für Figur 6 verwendete Ablenkvorrichtung 1 keine Reibungsvorrichtung 5 aufweist. Wegen der fehlenden Reibungsvorrichtung 5 weist die in Figur 6 dargestellte Schrittantwort ein ausgeprägtes und lange andauerndes Ausschwingverhalten auf, was bedeutet, dass der Spiegel unruhig ist und insbesondere vibriert. Dieses Verhalten ist nicht geeignet um den Laserstrahl in eine genau definierte Richtung abzulenken.

Startpulse 12a, Stopppulse 12b oder Korrekturpulse 12c können natürlich auch andere Pulsformen aufweisen als die in Figur 7 dargestellten. Beispielweise kann es sich als vorteilhaft erweisen einen Startpuls 12a mit einer sehr hohen Amplitude zu erzeugen, um die Strahlablenkungsvorrichtung 4 in Bewegung zu setzen, oder um eine aus irgendwelchen Gründen blockierte Strahlablenkungsvorrichtung 4 von der Blockierung zu lösen, um danach die Strahlablenkungsvorrichtung 4 mit Startpulsen niedrigerer Amplitude zu bewegen. Um die Strahlablenkungsvorrichtung um einen grösseren Winkelbetrag zu bewegen kann ein Startpuls mit hoher Amplitude vorteilhaft sein. Zudem kann der Puls in Funktion der Zeit in einer Vielzahl von zeitlichen Verläufen ausgestaltet sein, beispielsweise als ein Sägezahnpuls mit sehr kurzer steigender Flanke und langsam fallender Flanke, der z.B. ebenfalls geeignet ist eine Bewegung mit grösserer Schrittlänge beziehungsweise grösserem Winkelbetrag zu erzeugen. Die nach einem Startpuls ausgeführte Schrittlänge beziehungsweise der zurückgelegte Winkelbetrag der Strahlablenkungsvorrichtung 4 beziehungsweise des Spiegels 4 kann somit über die Pulsform, wie zeitlicher Verlauf oder Amplitude, bestimmt und falls erforderlich auch variiert werden.

Im Unterschied zu Figur 6 weist die in Figur 8 verwendete Ablenkvorrichtung 1 eine Reibungsvorrichtung 5 auf. Die in Figur 8 dargestellte Schrittantwort der Drehbewegung der Welle 2b beziehungsweise des Spiegels 4 in Funktion der Zeit auf den in Figur 7 dargestellten Startpuls zeigt, dass die Drehbewegung sehr schnell wieder zum Stillstand gelangt. Sobald der Stillstand oder zumindest ein annähernder Stillstand erreicht ist kann der Laser aktiviert werden, und der Laserstrahl durch die Stellung des Spiegels 4 in eine definierte Richtung abgelenkt werden. Das in Figur 7 dargestellte Stromsignal und die von der Reibungsvorrichtung 5 bewirkte Haftreibung und Gleitreibung können derart gegenseitig angepasst eingestellt werden, dass die Antriebsvorrichtung 2 eine gewünschte Schrittantwort, wie die in den Figuren 8 oder 9 dargestellten Schrittantworten aufweist. Die in Figur 9 dargestellte Schrittantwort ist gegenüber der in Figur 8 dargestellten Schrittantwort dahingehend verbessert, dass die Übergangszeit zwischen Ausgangslage und Endlage verkürzt ist. Im vorliegenden Ausführungsbeispiel wird dies dadurch erreicht, dass in der Schrittantwort gemäss Figur 8 nur der in Figur 7 dargestellte Startpuls 12a verwendet wird, wogegen in der Schrittantwort gemäss Figur 9 die drei in Figur 7 dargestellten Pulse, nämlich der Startpuls 12a, der Stopppuls 12b sowie ein Korrekturpuls 13c verwendet wird. Die Amplitude, die Zeitfolge sowie die Zeitdauer dieser drei Pulse beeinflusst den Verlauf der in Figur 9 dargestellten Schrittantwort. Der Korrekturpuls 12c kann einen positiven oder auch einen negativen Stromwert aufweisen, je nach dem welcher zeitliche Verlauf die Schrittantwort annehmen soll. Es kann sich als vorteilhaft erweisen auch mehr als einen Korrekturpuls 12c anzuwenden. Der oder die Korrekturpulse 12c und eventuell auch der Startpuls 12a und/oder der Stopppuls 12b sind in einem vorteilhaften Verfahren derart gewählt, insbesondere bezüglich Amplitude, Zeitfolge und/oder Zeitdauer, dass die Eigenvibrationen oder die Eigenschwingungen der Ablenkvorrichtung 1, insbesondere der Strahlablenkungsvorrichtung 4, zumindest teilweise reduziert oder unterdrückt werden.

In einer vorteilhaften Ausgestaltung ist die Ablenkvorrichtung 1 derart ausgestaltet und die Reibungsvorrichtung 5 derart eingestellt und sind die Strompulse derart gewählt, dass ein Startpuls 12a von kürzer als 1 ms genügt, um die Welle 2b beziehungsweise den Spiele 4 um einen Winkel Δα zu bewegen. In einer weiteren bevorzugten Ausführungsform werden pro Sekunde zumindest 500 Start- und Stopppulse 12a, 12b erzeugt, mit dazwischen liegendem Stillstand des Spiegels 4, während welchem ein Laserstrahl 6 dem Spiegel 4 zugeleitet wird. Vorzugsweise beträgt die Dauer des Stillstandes zumindest ein Drittel der Zeitdauer, welche zwischen zwei aufeinander folgenden Startpulsen 12a liegt. In einem bevorzugten Verfahren beträgt die Pulsweite des Startpulses 12a, des Stopppulses 12b und/oder des Korrekturpulses weniger als 500 µs.
In einem vorteilhaften Verfahren beträgt die Stromspitze des Startpulses 12a, des Stopppulses 12b und/oder des Korrekturpulses 12c zumindest das Zehnfache, vorzugsweise zumindest das Hundertfache des Nennstromes der Antriebsvorrichtung 2. Da die Dauer der Pulse ausgesprochen kurz ist führen derart hohe Nennströme nicht zu einer Überlastung oder einer Beschädigung der Antriebsvorrichtung 2. Derart hohe Nennströme ermöglichen auch bei einer kleinen Antriebsvorrichtung grosse Kräfte zu erzielen, beziehungsweise ermöglichen eine kleine und kostengünstige Antriebsvorrichtung zu verwenden, welche in der Lage ist die erforderliche Kraft zu erzeugen.

Die erfindungsgemässe Antriebsvorrichtung 2 wird besonders vorteilhaft in Kombination mit einem gepulsten Laser 13 verwendet. Figur 10 zeigt eine Draufsicht auf eine Hautoberfläche 15, welche eine Vielzahl von diskreten, mit dem Laser 13 erzeugten Poren 16 aufweist. Diese Poren 16 sollten vorzugsweise in regelmässigen Abständen und vorzugsweise auch möglichst schnell erzeugt werden. Die erfindungsgemässe Antriebsvorrichtung 2 mit wie in Figur 4 dargestellt zwei beweglichen Spiegel 4 in Kombination mit einem gepulsten Laser 13 erlaubt es die in Figur 10 dargestellten Poren 16 sehr schnell zu erzeugen. Die erfindungsgemässe Antriebsvorrichtung 2 ermöglicht es beispielsweise pro Sekunde 500 unterschiedliche Ablenkwinkel zu erzeugen, wobei es zudem möglich ist während dem Stillstand des Spiegels 4 nacheinander folgend eine Mehrzahl von Laserstrahlen derselben Pore 16 zuzuführen. Dank der erfindungsgemässen Antriebsvorrichtung können somit beispielsweise etwa 500 Poren 16 pro Sekunde erzeugt werden. Somit ist eine Anwendungszeit von Bruchteilen von Sekunden bis zu wenigen Sekunden erforderlich, um beispielsweise an der Hautoberfläche eine Vielzahl von Poren 16 zu erzeugen.

Die Startpulse 12a können in regelmässigen Zeitabständen erfolgen. Es ist jedoch auch möglich die Startpulse 12a in unregelmässigen Zeitabständen dem Motor 2 zuzuführen, beispielsweise weil der Spiegel 4 während unterschiedlich langer Zeit still stehen soll, weil beispielsweise je nach Auslenkung des Spiegels 4 der Laserstahl 13 während einer längeren Zeit aktiviert wird, oder eine Mehrzahl von nacheinander folgenden Laserpulsen in dieselbe Richtung abgelenkt werden soll.

Die Strahlablenkungsvorrichtung 4 kann auf verschiedene Weise ausgestaltet sein, beispielsweise als Spiegel, jedoch beispielsweise auch als Prisma oder als Kristall.

Die Antriebsvorrichtung 2 kann in einer Vielzahl von Möglichkeiten ausgestaltet sein, beispielsweise als ein linearer Aktuator, wie ein Voice Coil Aktuator, ähnlich einem Audiolautsprecher, oder ein Hubmagnet, oder ein Piezoaktuator oder ein Piezo-Stack-Aktuator oder Piezo-Sägezahnaktuator (Piezostepper), oder ein Linearmotor auf der Basis einer linearen Multi-Magnetanordnung, wobei N- und S-Pol immer nebeneinander angeordnet sind und ein Spulenpaar linear darüber bewegt wird. Zum Teil kann das Magnetband auch oberhalb und unterhalb der Spulenpaare parallel angeordnet sein. Weitere lineare Aktuatoren könnten sein:
- Linear Stepper (Schrittmotor, der die Drehbewegung auf eine Welle überträgt, sodass eine lineare Bewegung resultiert)
- Prinzip der Kurbelwelle und Pleuelstange
- Prinzip über einen Exzenter und einen Hebel eine Drehbewegung in eine Linearbewegung zu wandeln.

Die Antriebsvorrichtung 2 kann auch als rotativer Aktuator ausgestaltet sein, wie beispielsweise:
- Voice Coil rotativ (bekannt aus Computer-Festplatten)
- Motoren im allgemeinen Sinn (bürstenlos und mit Bürsten)
- Galvanometer (moving coil und moving magnet)
- Schrittmotoren
- Bimetall-Aktuator
- Biege-Piezo-Aktuator
- Jedes Prinzip , das über ein Drehgelenk gelagert ist und entweder über Elektrostatik oder über Magnetkraft bzw. elektromagnetisch betätigt wird und somit in einer Drehbewegung resultiert

Reibungskräfte, insbesondere eine Haftreibung oder eine Gleitreibung können mit einer Vielzahl von Vorrichtungen erzeugt werden, z.B.:
- In Kugellagern
- In Gleitlagern
- Gleitlager, zusätzlich einstellbar spannbar
- Wirbelstrombremsen
- Prinzip Reibkupplung, wie diese bei Automobilen bekannt ist
- Ein Körper der mit einer Feder oder sonstigen, ev. einstellbaren Zustellkraft (auch aktiv z.B. mittels Piezo,) auf einen anderen Körper drückt
- Reibung verursacht im Antriebstrang (vgl. Exzenter-Hebel)

Rückstellkräfte können beispielsweise erzeugt werden mittels Federn, Torsion oder aktiv mittels Aktuator.

Zum Betrieb der Ablenkvorrichtung sind eine Vielzahl von Regelverfahren und Regelungsmechanismen möglich, wie zum Beispiel:
- In einem closed loop Systemen mit absichtlich erzeugter Reibung (Reibungsvorrichtung) kann der Spiegel 4 von einem mechanischen Endanschlag zum anderen Endanschlag in Schritten durchgesteppt beziehungsweise durchbewegt werden, die Anzahl Schritte gezählt werden, danach zurückgesteppt werden, die Schritte verglichen werden, und je nach Bedarf die Schrittgrösse geändert werden, um Effekte wie Alterung, Umgebungsbedingungen, sich geänderte Linearität usw. zu ermitteln und gegebenenfalls zu kompensieren.
- In einem closed loop Systemen mit Feedback (Sensor) und absichtlicher erzeugter Reibung (Reibungsvorrichtung) kann, falls die Haftreibung nicht wie erwartet überwunden werden kann, der Startpuls temporär verlängert oder erhöht werden und danach wieder auf den üblichen Wert zurückgesetzt werden.
- Am Motor kann natürlich auch die Back-EMF gemessen werden um zu erkennen, ob der Spiegel steht oder, falls er sich bewebt, wie bei den anderen Pulsen gleiche Werte zurückspeist
- Am Motor kann auch die Stromaufnahme gemessen werden, zum Beispiel zur Detektion einer Blockierung.
- Bei Piezosystemen gilt, dass eine vorgegebene Spannung am Piezo zu einer definierten, reproduzierbaren Positionsänderung führt. Ähnlich ist dies bei Bimetall Aktuatoren.

Die Position, insbesondere die Auslenkung des Spiegels 4, kann mit einer Vielzahl von Sensoren gemessen werden, insbesondere mit Winkelsensoren oder Sensorik - Winkel oder Positionsdetektoren. Die Rotation kann beispielsweise gemessen werden mit: Drehgebern, welche beispielsweise an Drehachsen montiert werden. Mögliche Erfassungsmethoden und Sensoren sind beispielsweise:
- Magnetoresistiv
- Induktiv
- Optische Drehgeber
- Kapzitiv (bekannt von Galvanometer)
- Näherungssensoren
- Dehnmessstreifen

Lineare Bewegungen können beispielsweise gemessen werden mit Lineargebern, wie bei Massstäben in Linearachsen und anderen linearen Motoren üblich. Mögliche Erfassungsmethoden und Sensoren für lineare Messungen sind beispielsweise:
- Magnetoresistiv
- Induktiv
- Optische Lineargeber
- Lasertriangulation
- Laser TOF (time of fligth) messungen (Distanzmessgeräte)
- Kapzitiv (bekannt von Galvanometer)
- Näherungssensoren

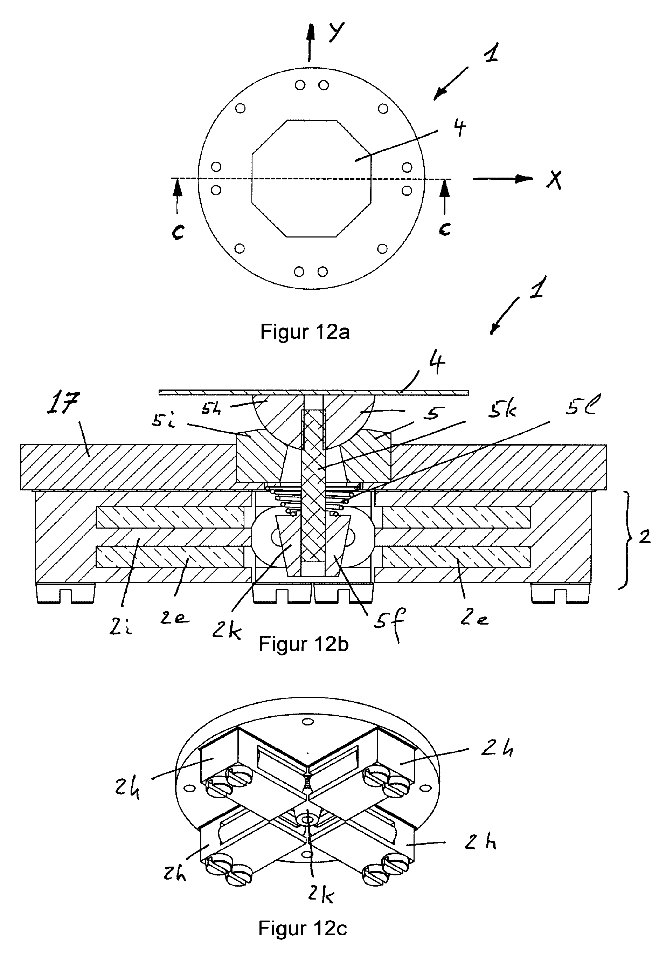

Die Figuren 12a bis 12c zeigen ein weiteres Ausführungsbeispiel einer Ablenkvorrichtung 1 mit einem in zwei Dimensionen schwenkbar gelagerten Spiegel 4. Figur 12b zeigt einen Längsschnitt entlang der Schnittlinie C-C. Der Spiegel 4 ist über die Reibungsvorrichtung 5 schwenkbar mit dem darunter angeordneten Basisteil 17 verbunden. Die Reibungsvorrichtung 5 umfasst ein halbkugelförmiges Teil 5h sowie ein gegengleich ausgestaltetes Gleit-und Halteteil 5i mit einer halbkugelförmigen Ausnehmung. Die Reibungsvorrichtung 5 umfasst zudem ein Verbindungszeit 5k, eine Feder 51, sowie eine Spannvorrichtung 5f, mit welcher die Anpresskraft der Feder 51 zwischen Spannvorrichtung 5f und Halteteil 5i einstellbar ist. Über die Anpresskraft ist die Auflagekraft zwischen dem Teil 5h und dem Teil 5i einstellbar, sodass die Halte-und Reibungskraft der Reibungsvorrichtung 5 einstellbar ist. Unterhalb des Basisteils 17 sind, wie auch aus Figur 12c ersichtlich, vier Magnete 2h kreuzförmig verlaufend angeordnet, wobei sich im Mittelpunkt ein Anker 2k befindet, der im dargestellten Ausführungsbeispiel zudem die Spannvorrichtung 5f ausbildet. Jedes Magnet 2h umfasst einen Magnetkern 2i sowie eine Magnetspule 2e. Je zwei gegenüber liegende Magnete 2h bilden zusammen eine Antriebsvorrichtung 2, sodass die erste Antriebsvorrichtung 2 eine Auslenkung des Spiegels 4 und somit des am Spiegel 4 reflektierten Laserstrahls in X-Richtung und die zweite Antriebsvorrichtung 2 eine Auslenkung des Spiegels 4 beziehungsweise des Laserstrahls in Y-Richtung bewirkt. Die in den Figuren 12a bis 12c dargestellte Ablenkvorrichtung 1 kann wie in den Figuren 7 bis 11 beschrieben angesteuert werden, indem die Antriebsvorrichtung 2 derart mit dem in Figur 7 dargestellten Startstrompuls 12a betrieben wird, dass die Haftreibung der Reibungsvorrichtung 5 überwunden wird, und somit der Spiegel 4 beziehungsweise das halbkugelförmige Teil 5h bezüglich dem Teil 5i kurzfristig bewegt wird. Die vorhandene Gleitreibung bewirkt, dass der Spiegel 4 nach erfolgtem Startpuls 12a sehr schnell wieder in eine Ruhelage kommt. Die beiden Antriebsvorrichtung 2 können zeitlich nacheinander oder auch gleichzeitig mit einem Strompuls versehen werden, um eine Drehbewegung des Spiegels 4 in X- oder Y- oder X- und Y-Richtung zu bewirken. Figur 4 zeigt ein Ausführungsbeispiel einer Ablenkvorrichtung 1 mit zwei Spiegeln 4a, 4b, welche je in eine Richtung drehbar gelagert sind. Im Unterschied dazu offenbart die in den Figuren 12a bis 12c dargestellte Ausführungsform einen einzigen Spiegel 4, der dafür bezüglich zweier Dimensionen verschiebbar gelagert ist. Ansonst sind die in den Figuren 4 und 12a bis 12c dargestellten Ablenkvorrichtung 1 an sich sehr ähnlich betreibbar.

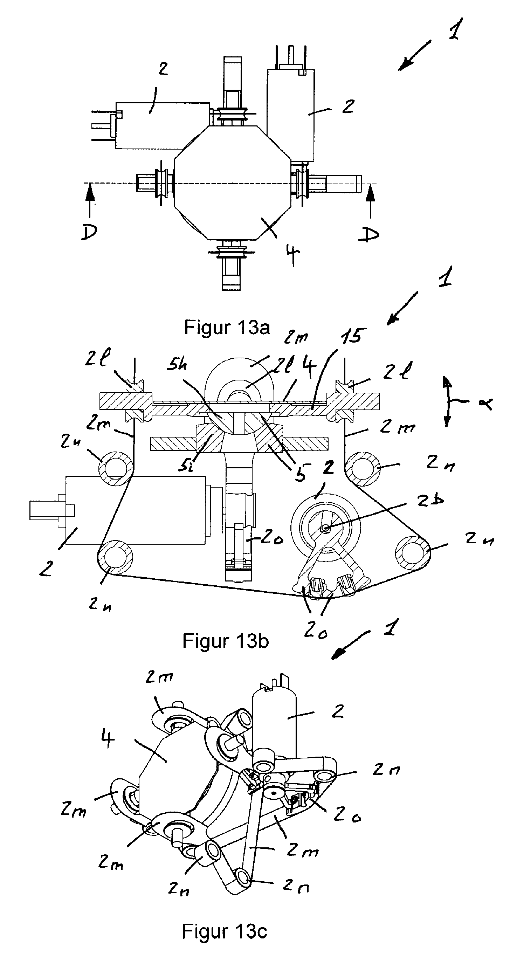

Die Figuren 13a bis 13c zeigen ein weiteres Ausführungsbeispiel einer Ablenkvorrichtung 1 mit Spiegel 4, wobei diese Ablenkvorrichtung 1 von zwei Motoren 2 angetrieben wird, wie diese beispielsweise in den Figuren 1 bis 3 dargestellt sind. Figur 13b zeigt einen Schnitt entlang der Schnittlinie D-D. Die Reibungsvorrichtung 5 ist ähnlich wie in Figur 12b dargestellt ausgestaltet, mit einem halbkugelförmigen Teil 5h sowie einem Gegenteil 5i mit halbkugelförmiger Ausnehmung, sodass der Spiegel 4 bezüglich zweier Dimensionen beweglich gelagert ist, wobei Haft- und Gleitreibung der Reibungsvorrichtung 5 insbesondere auch durch die Ausgestaltung der Auflageflächen sowie die Auflagekräfte der Teile 5h, 5i bestimmt wird. Aus Figur 13b ist ersichtlich, dass das Schwenkteil 15, auf welchem der Spiegel 4 aufliegt, über Befestigungsteile 21, einem gemeinsamen flexiblen Band 2m, sowie über Umlenkrollen 2n mit der Antriebsvorrichtung 2 verbunden ist, wobei das Band 2m über einen Arm 2o fest mit der Welle 2b der Antriebsvorrichtung 2 verbunden ist. Die Antriebsvorrichtung 2 kann als ein Elektromotor ausgestaltet sein, wie dieser in den Figuren 1 bis 3 dargestellt ist. Ein Betätigen der Antriebsvorrichtung 2 hat zur Folge, dass sich das Schwenkteil 15 in Richtung des Winkels α bewegt. Wie insbesondere aus Figur 13c ersichtlich umfasst die Ablenkvorrichtung 1 zwei flexible Bänder 2m, wobei jedes Band 2m von einer Antriebsvorrichtung 2 angetrieben ist, sodass das Schwenkteil 15 und somit der Spiegel 4 bezüglich zweier Dimensionen verschiebbar gelagert ist.

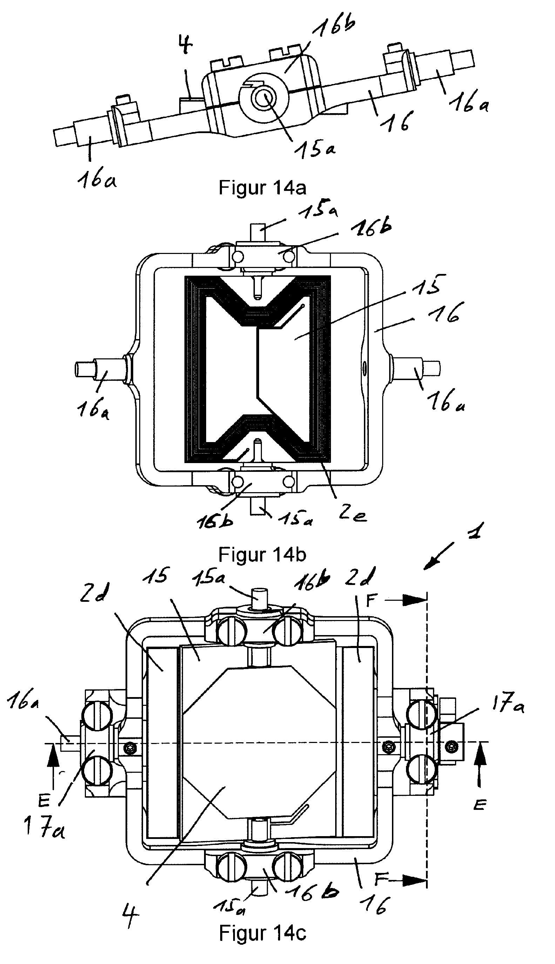

Die Figuren 14a bis 14f zeigen ein weiteres Ausführungsbeispiel einer Ablenkvorrichtung 1. Die in Figur 14c dargestellte Ablenkvorrichtung 1 umfasst ein Schwenkteil 15 mit Achsen 15a, wobei das Schwenkteil 15 in Lagern 16b drehbar gelagert ist. Auf dem Schwenkteil 15 ist der Spiegel 4 befestigt. Die Ablenkvorrichtung 1 umfasst zudem einen Rahmen 16 mit Achsen 16a, welche in einem Lager 17a drehbar gelagert sind. Die Achse 15a und das Lager 16b beziehungsweise die Achse 16a und das Lager 17a bilden jeweils eine Reibungsvorrichtung 5, wobei über die Schrauben des Lagers 16b beziehungsweise 17a die Anpresskraft und somit auch die Haft- und Gleitreibung einstellbar ist. Am Rahmen 16 sind zudem zwei Permanentmagnete 2d befestigt. Figur 14a zeigt eine Seitenansicht des Rahmens 16 mit im Lager 16b drehbar gelagerter Achse 15a, wobei das Schwenkteil 15 mit Spiegel 4 bezüglich dem Rahmen 16 leicht verdreht angeordnet ist. Figur 14b zeigt den in Figur 14a dargestellten Rahmen 16 von unten. Das Schwenkteil 15 umfasst elektrisch leitende Windungen 2e. Diese Windungen 2e bilden zusammen mit den beiden Permanentmagneten 2d eine Antriebsvorrichtung 2, sodass das Schwenkteil 15 in Abhängigkeit des durch die Windungen 2e fliessenden Stroms um die Achse 15a geschwenkt werden kann. In einer vorteilhaften Ausgestaltung die die Achse 15a sowie das Lager 16b als eine Reibungsvorrichtung 5 ausgestaltet, um eine Haft- und Gleitreibung zu bewirken. In einer weiteren vorteilhaften Ausgestaltung ist die Achse 15a mit geringer Reibung oder möglichst ohne Reibung im Lager 16b gelagert, sodass das Schwenkteil 15 ähnlich einem Galvanometer betreibbar ist, indem die Windungen 2e ständig von Strom durchflossen sind, und dadurch die Auslenkung des Schwenkteils 15 bezüglich den Permanentmagneten 2d bestimmt wird. Es könnte zudem eine nicht dargestellte Rückstellvorrichtung vorgesehen sein, um das Schwenkteil 15 selbsttätig in eine definierte Nulllage zu bringe. Die Rückstellvorrichtung ist vorteilhafterweise als Feder ausgestaltet, vorzugsweise derart, dass das Schwenkteil 15 in der Ruhelage in der in Figur 14a dargestellten Ansicht parallel zum Rahmen 16 verläuft.

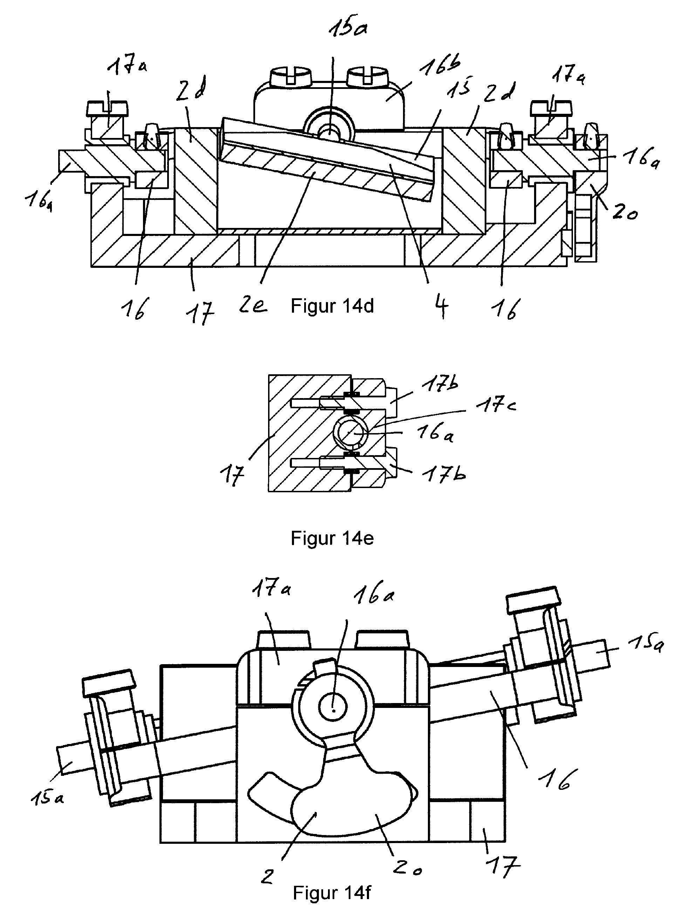

Figur 14d zeigt einen Schnitt entlang der Schnittlinie E-E. Die Lager 17a bilden Teil eines Basisteil 17. Rechts ist die Achse 16a mit einem Arm 2o einer Antriebsvorrichtung 2 verbunden. Figur 14e zeigt einen Schnitt entlang der Schnittlinie F-F. Ein Befestigungsteil 17c ist über Schrauben 17b mit dem Basisteil 17 verbunden. In einer bevorzugten Ausgestaltung bilden das Befestigungsteil 17c, das Basisteil 17 und die Achse 16a eine Reibungsvorrichtung 5, wobei die Kräfte über die Schrauben 17b einstellbar sind. In einer weiteren vorteilhaften Ausgestaltung ist die Achse 16a möglichst reibungsarm bezüglich des Basisteils 17 gelagert.

Figur 14f zeigt eine Ansicht der rechten Stirnseite der in Figur 14c dargestellten Ablenkvorrichtung 1. Der Arm 2o, welcher in diesem Beispiel das Spulenpaar eines rotativen Voice Coil Motors und der über einem Magnetlagerarray am Gehäuse läuft, ist fest mit der Achse 16a verbunden, wobei der Arm 2o leicht verschwenkt ist, was zur Folge hat, dass der Rahmen 16 wie dargestellt ebenfalls leicht verschwenkt ist. Im Rahmen 16 ist das Schwenkteil 15 über die Achsen 15a ebenfalls drehbar gelagert, sodass das Schwenkteil 15 sowohl bezüglich der Achse 16a als auch bezüglich der Achse 15a, und somit bezüglich zweier Dimensionen drehbar gelagert ist. Der Arm 2o bildet vorzugsweise Teil einer Antriebsvorrichtung 2, beispielsweise eines "rotary voice coil motors", wie dieser für Festplatten verwendet wird. Eine derartige Antriebsvorrichtung 2 ermöglicht den Arm 2o sehr schnell zu bewegen. In einer bevorzugten Ausgestaltung ist zumindest eines der Kombinationen Achse 15a/Lager 16b und Achse 16a/Lager 17a als Reibungsvorrichtung 5 ausgestaltet, um die Antriebsvorrichtung 1 wie in den Figuren 7 bis 11 beschrieben zu betreiben. In einer weiteren vorteilhaften Ausgestaltung sind die Kombinationen Achse 15a/Lager 16b und Achse 16a/Lager 17a möglichst reibungsarm ausgestaltet, sodass die Achsen 15a, 16a leichtgängig bewegbar sind, über die erste Antriebsvorrichtung 2 mit Arm 2o sowie über die zweite Antriebsvorrichtung 2 mit Permanentmagnet 2d und Windungen 2e.

In einer vorteilhaften Ausgestaltung ist es auch möglich die Schwenklage des Spiegels 4 bezüglich dem Rahmen 16 mittels Induktion zu messen, indem beispielsweise Entlang des Rahmens 16 ein Draht verläuft, welcher mit einer Spannung gespeist wird. Das erzeugte Feld wird mit der Wicklung 2e gemessen, woraus der Drehwinkel des Spiegels 4 bezüglich des Rahmens 16 abgeleitet werden kann. Es gibt eine Vielzahl von Anordnungsmöglichkeiten einer Spule, zusätzlich zur Wicklung 2e, um derart mittels Induktion den Drehwinkel des Spiegels bezüglich dem Rahmen 16 zu messen.

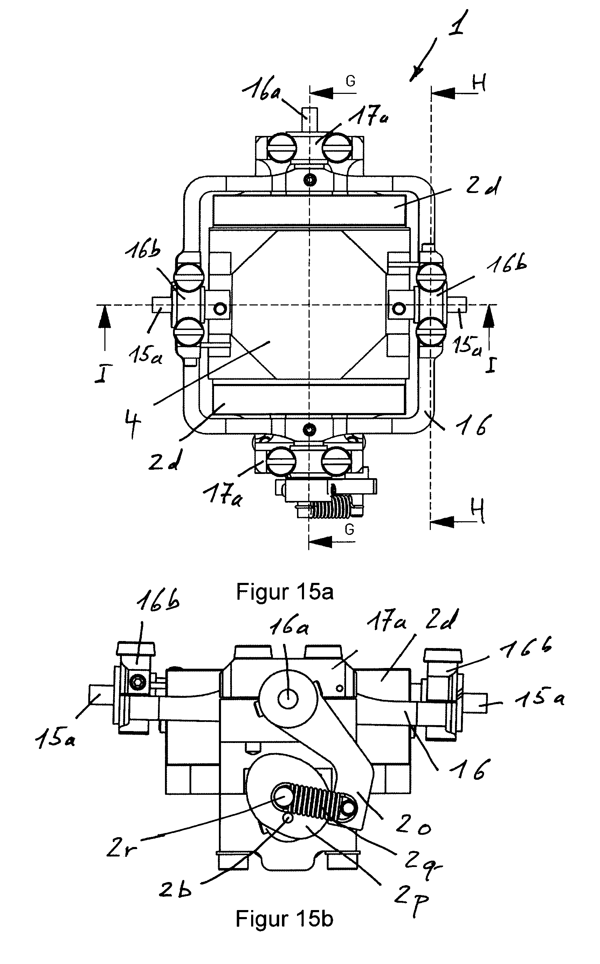

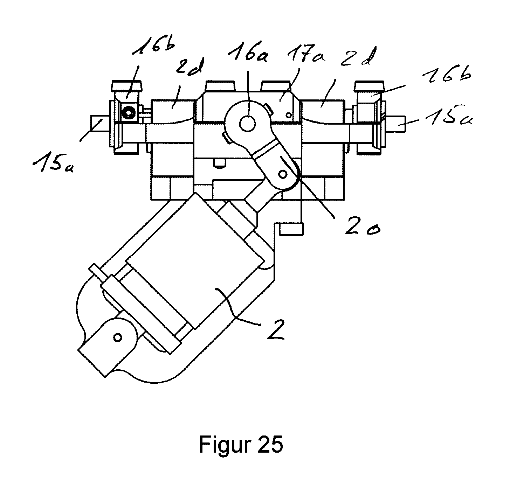

Die Figuren 15a bis 15e zeigen ein weiteres Ausführungsbeispiel einer Antriebsvorrichtung 1. Der Unterschied zwischen den in den Figuren 14c und 15a dargestellten Ausführungsformen besteht im Wesentlichen darin, dass der Antrieb des Rahmens 16 anders ausgestaltet ist. Figur 15b zeigt eine Stirnansicht des Antriebs, beziehungsweise zeigt eine Frontansicht des in Figur 15a unten angeordneten Abschnittes. Der Rahmen 16 ist über die Achse 16a mit dem Arm 2o verbunden. Die Welle 2b der Antriebsvorrichtung 2 ist mit einer Exzenterscheibe 2p verbunden. Die Exzenterscheibe umfasst einen Nocken 2r, mit welchem eine Feder 2q verbunden ist. Die Feder 2q ist zudem mit dem Arm 2o verbunden, sodass der Arm 2o an der Exzenterscheibe 2p anliegt und sich dadurch beim Drehen der Welle 2b entlang der Kontur der Exzenterscheibe 2p bewegt. Dadurch ist sichergestellt, dass die Drehbewegung des Motors 2 beziehungsweise der Welle 2b auf den Rahmen 16 übertragen wird. Figur 25 zeigt dieselbe Anordnung wie in Figur 15b jedoch mit einem Linearantrieb 2, der an dessen Enden drehbar gelagert ist, wobei das eine Ende drehbar mit dem Arm 2o verbunden ist, sodass eine Längenänderung des Linearantriebs 2 eine Schwenkbewegung des Arms 2o bewirkt. Wie aus diesem Ausführungsbeispiel ersichtlich ist kann die Antriebsvorrichtung 2 in einer Vielzahl von Möglichkeiten ausgestaltet sein, um eine Schwenkbewegung zu erzeugen.

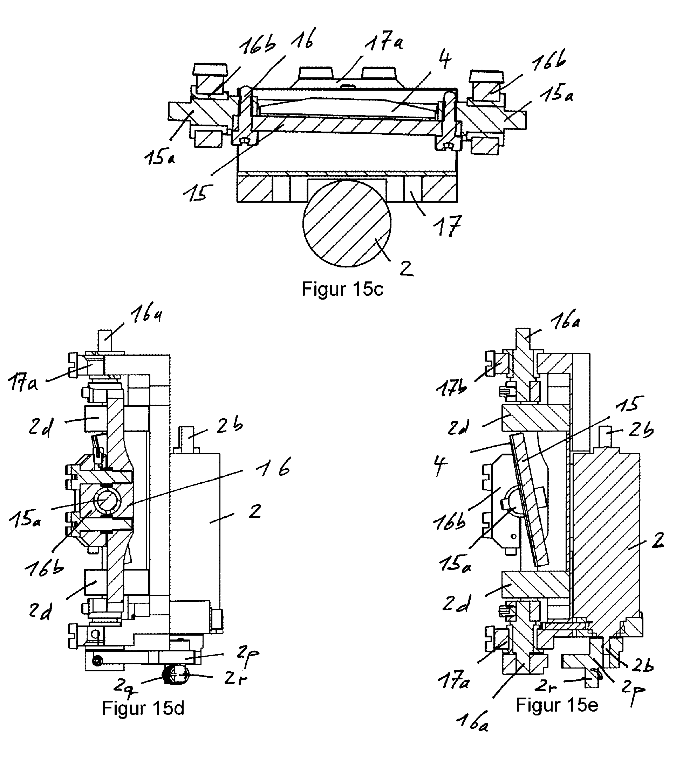

Figur 15c zeigt einen Schnitt entlang der Linie I-I. Der Motor 2, vorteilhafterweise ein Motor 2 wie in Figur 3 dargestellt, ist in der Mitte unterhalb des Basisteils 17 angeordnet. Die Figur 15d zeigt einen Schnitt entlang der Schnittlinie H-H. Die Figur 15e zeigt einen Schnitt entlang der Schnittlinie G-G.
In einer bevorzugten Ausgestaltung ist zumindest eines der Kombinationen Achse 15a/Lager 16b und Achse 16a/Lager 17a als Reibungsvorrichtung 5 ausgestaltet, um die Antriebsvorrichtung 1 wie in den Figuren 7 bis 11 beschrieben zu betreiben. In einer weiteren vorteilhaften Ausgestaltung sind die Kombinationen Achse 15a/Lager 16b und Achse 16a/Lager 17a möglichst reibungsarm ausgestaltet, sodass die Achsen 15a, 16a leichtgängig bewegbar sind, über die erste Antriebsvorrichtung 2 mit Arm 2o sowie über die zweite Antriebsvorrichtung 2 mit Permanentmagnet 2d und Windungen 2e.

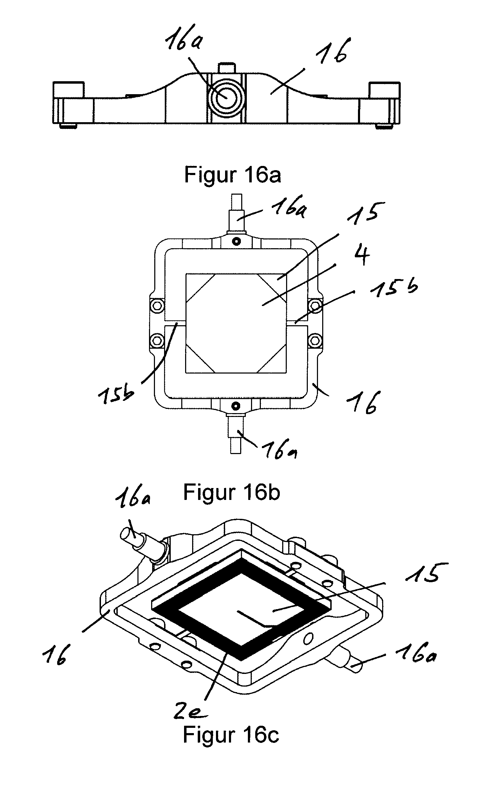

Die Figuren 16a bis 16h zeigen ein weiteres Ausführungsbeispiel einer Ablenkvorrichtung 1. Figur 16b zeigt eine Draufsicht eines Rahmens 16 mit Achsen 16a sowie einem am Rahmen 16 gehaltenen Schwenkteil 15. Im Unterschied zu der in Figur 14b dargestellten Ausführungsform ist das Schwenkteil 15 in Figur 16b nicht über eine drehbar gelagerte Achse sondern über ein flexibles Verbindungsteil 15b gehalten. Das flexibel Verbindungsteil 15b kann beispielsweise als eine Blattfeder ausgestaltet sein, wobei die Blattfeder vorteilhafterweise eine derartige Rückstellkraft erzeugt, dass das Schwenkteil 15 selbsttätig eine Neutrallage einnimmt. Wie aus der Untenansicht aus Figur 16c ersichtlich umfasst das Schwenkteil 15 Windungen 2e, welche Teil der Antriebsvorrichtung 2 bilden. Figur 16a zeigt eine Seitenansicht des Rahmens 16 gemäss Figur 16b.

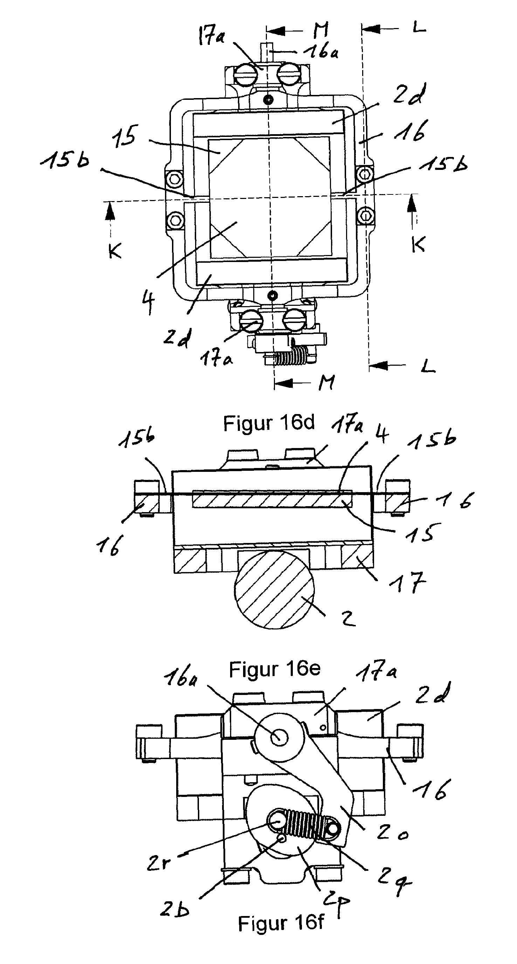

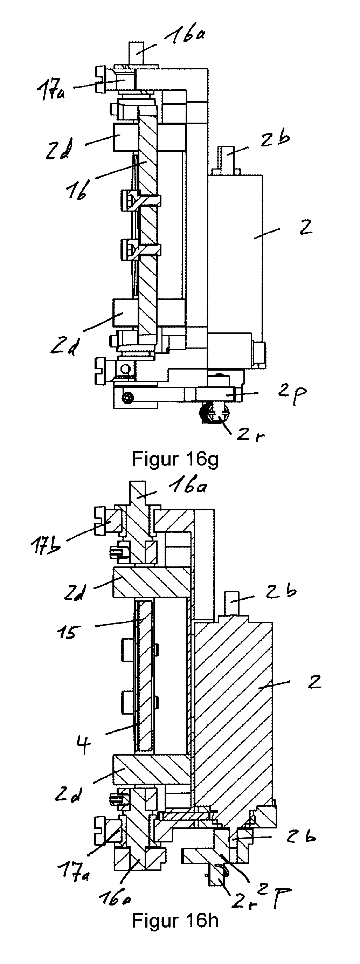

Figur 16d zeigt im Wesentlichen die Anordnung gemäss Figur 15a, mit dem einzigen Unterschied, dass das Schwenkteil 15 über flexible Verbindungsteile 15b gehalten ist, und nicht, wie in Figur 15a dargestellt, über eine Achse 15a mit Lager 16b. Figur 16f zeigt die Stirnseite des in Figur 16d, unten angeordneten Abschnittes. Die Figuren 16e, 16g und 16h zeigen Schnitte entlang den Schnittlinien K-K, beziehungsweise L-L und M-M.

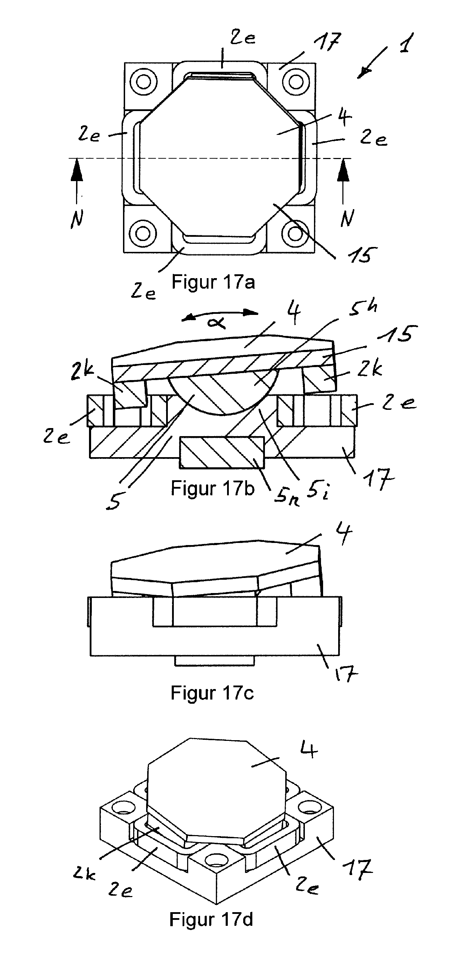

Die Figuren 17a bis 17d zeigen ein weiteres Ausführungsbeispiel einer Ablenkvorrichtung 1. Wie in Figur 17a dargestellt umfasst die Ablenkvorrichtung 1 ein Basisteil 17 mit vier Magnetspulen 2e sowie ein verschwenkbar gelagertes Schwenkteil 15 mit Spiegel 4. Figur 17b zeigt in einem Längsschnitt entlang der Schnittlinie N-N, dass der Spiegel 4 über eine Reibungsvorrichtung 5 bezüglich dem Basisteil 17 schwenkbar gelagert ist, wobei die Reibungsvorrichtung 5 ein halbkugelförmiges Teil 5h sowie ein entsprechendes Teil 5i mit einer halbkugelförmigen Ausnehmung umfasst. Am Schwenkteil 15 sind gegenüberliegend je ein Anker 2k angebracht, welcher mit der entsprechend angeordneten Magnetspule 2e in Wirkverbindung tritt, wobei die in Figur 17b dargestellten Anker 2k und Magnetspulen 2e eine Antriebsvorrichtung 2 ausbilden, welche es erlauben das Schwenkteil 15 in Richtung des Winkels α zu verschwenken. In einer Ausführungsform könnte beispielsweise das halbkugelförmige Teil 5h als magnetisches Teil und das Teil 5n als Permanentmagnet ausgestaltet sein, sodass das halbkugelförmige Teil 5h über magnetisch wirkende Kräfte im Basisteil 17 gehalten ist. Figur 17c zeigt eine Seitenansicht sowie Figur 17d eine perspektivische Ansicht der Ablenkvorrichtung 1.

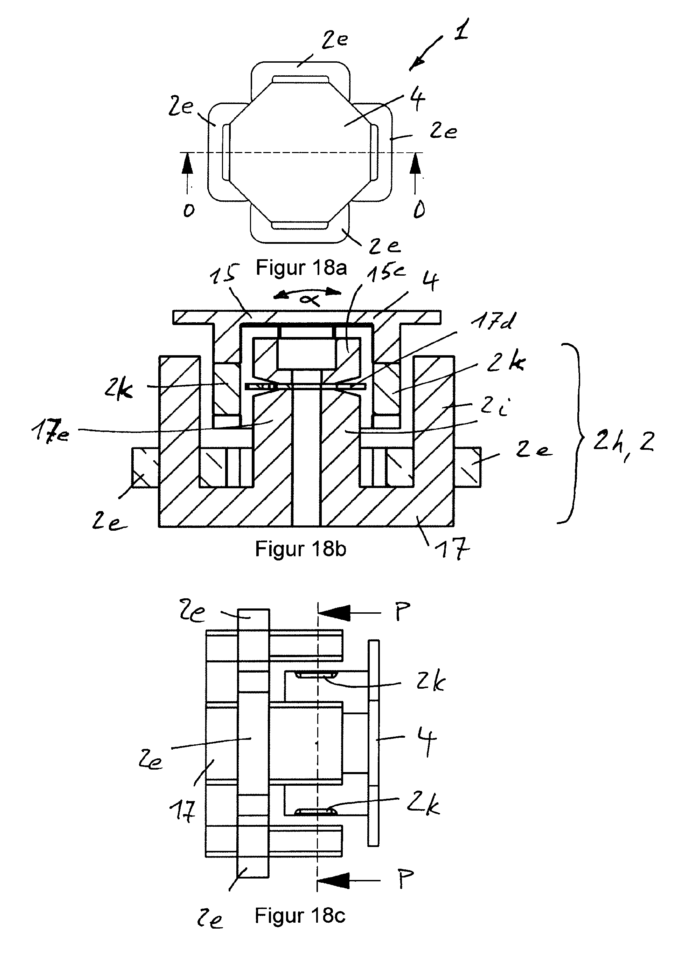

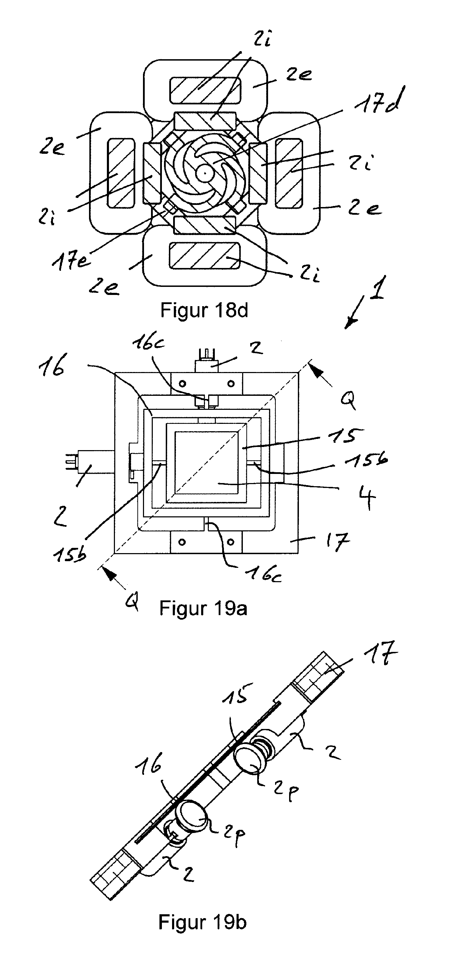

Die Figuren 18a bis 18d zeigen ein weiteres Ausführungsbeispiel einer Ablenkvorrichtung 1. Wie in Figur 18a dargestellt umfasst die Ablenkvorrichtung 1 vier Magnetspulen 2e sowie ein verschwenkbar gelagertes Schwenkteil 15 mit Spiegel 4. Figur 17b zeigt in einem Längsschnitt entlang der Schnittlinie O-O, dass der Spiegel 4 über eine Feder 17d bezüglich dem Basisteil 17 beziehungsweise dem Verbindungsteil 17e schwenkbar gelagert ist. Am Schwenkteil 15 sind gegenüberliegend je ein Anker 2k angebracht, welcher mit der entsprechend angeordneten Magnetspule 2e sowie den magnetisch leitenden Teilen 2i in Wirkverbindung tritt, wobei die in Figur 18b dargestellten Anker 2k und Magnetspulen 2e eine Antriebsvorrichtung 2 ausbilden, welche es erlauben das Schwenkteil 15 in Richtung des Winkels α zu verschwenken. Figur 18c zeigt eine Seitenansicht der Ablenkvorrichtung 1. Figur 18d zeigt einen Schnitt entlang der Schnittlinie P-P. Daraus sind insbesondere die magnetisch leitenden Teile 2i sowie die Magnetspulen 2e ersichtlich. Zudem ist die Feder 17d im Schnitt dargestellt. Diese Feder 17d ist aussen mit dem Verbindungsteil 17e verbunden und ist im Zentrum mit dem Verbindungsteil 15c verbunden, sodass das Schwenkteil 15 bezüglich dem Verbindungsteil 17e schwenkbar gelagert ist.

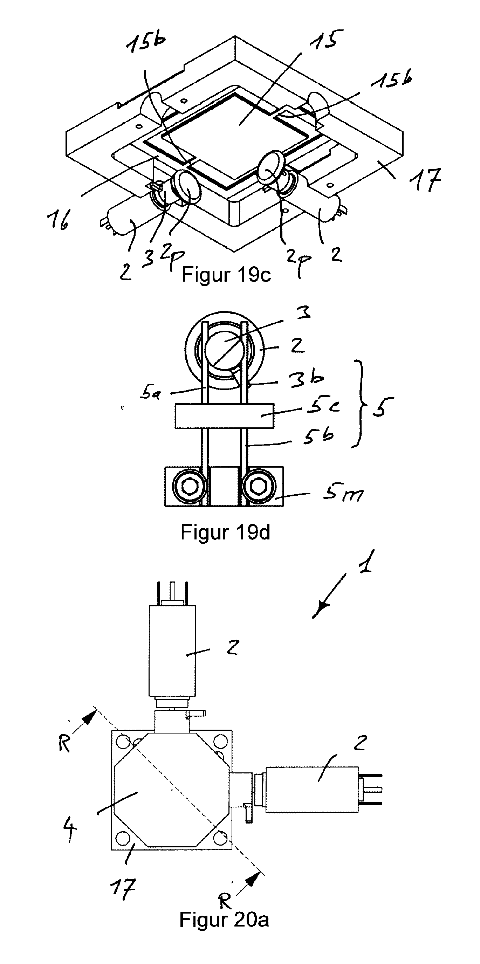

Die Figuren 19a bis 19d zeigen ein weiteres Ausführungsbeispiel einer Ablenkvorrichtung 1. Das Schwenkteil 15 mit Spiegel 4 ist über ein elastisch verformbares Verbindungsteil 15b mit dem Rahmen 16 verbunden. Der Rahmen 16 ist über ein elastisch verformbares Verbindungsteil 16c mit dem Basisteil 17 verbunden. Zudem sind zwei Antriebsvorrichtungen 2 ersichtlich. Figur 19b zeigt einen Schnitt entlang der Schnittlinie Q-Q. Jeder Motor 2 ist mit einer Exzenterscheibe 2p verbunden wobei die eine Exzenterscheibe 2p auf das Schwenkteil 15 und die andere Exzenterscheibe 2p auf den Rahmen 16 wirkt. Figur 19c zeigt die in Figur 19a dargestellte Ablenkvorrichtung 1 von unten. Die Reibungsvorrichtung 5 kann durch die zwischen der Exzenterscheibe 2p und dem Schwenkteil 15 beziehungsweise dem Rahmen 16 entstehende Reibungskraft erzeugt werden. In einer weiteren Ausgestaltung kann jedoch auch beispielsweise die in Figur 19d dargestellte Reibungsvorrichtung 5 verwendet werden, welche, ähnlich wie in den Figuren 1 bis 3 dargestellt, auf ein Verbindungsteil 3 einwirkt, und über Drähte 5a, 5b und ein Halteteil 5m eine Haft- und eine Gleitreibung auf das Verbindungsteil 3 bewirkt. In einer bevorzugten Ausführungsform bewirken die Verbindungsteile 15b und 16c eine derartige Rückstellkraft, sodass das Schwenkteil 15 beziehungsweise der Rahmen 16 in jeder Schwenkposition vorzugsweise ständig an der Exzenterscheibe 2p anliegen. Dies hat zur Folge, dass die Verbindungsteile 15b und 16c in der in den Figuren 19a bis 19c dargestellten Neutrallage beziehungsweise Mittellage eine Drehmoment erzeugen müssen, damit der Rahmen 16 beziehungsweise das Schwenkteil 15 sicher und auch während dem weiteren Verschwenken an der Exzenterscheibe 2p anliegt.

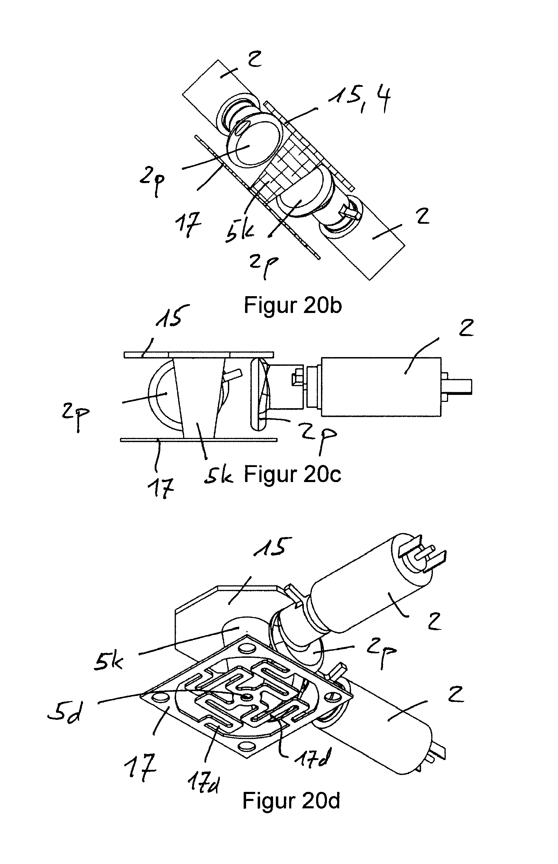

Die Figuren 20a bis 20d zeigen ein weiteres Ausführungsbeispiel einer Ablenkvorrichtung 1. Figur 20a zeigt in einer Draufsicht die Antriebsvorrichtung 1 mit Spiegel 4, Basisteil 17 und zwei Antriebsvorrichtungen 2. Wie in Figur 20b dargestellt ist das Schwenkteil 15 mit Spiegel 4 über ein Verbindungsteil 5k mit dem Basisteil 17 verbunden. Die beiden Elektromotoren 2 sind um 90 Grad versetzt angeordnet und weisen je eine Exzenterscheibe 2p auf, welche unten auf das Schwenkteil 15 wirkt. Figur 20c zeigt eine weitere Seitenansicht der in Figur 20b dargestellten Anordnung. Figur 20d zeigt eine perspektivische Ansicht von unten. Das Basisteil 17 weist vier mäanderförmig verlaufende Federn 17d auf, welche sich bei einer gemeinsamen Bohrung 5d treffen. Das Verbindungsteil 5k ist über eine nicht dargestellte Schraube fest mit der Bohrung 5d verbunden. Das Basisteil 17 ist fest angeordnet, wogegen die Bohrung 5d über die Federn 17d bezüglich dem Basisteil 17 beweglich ist. Die am Schwenkteil 15 angreifenden Exzenterscheiben 2p bewirken ein Anheben des Schwenkteils 15, sodass das Schwenkteil bezüglich zweier Dimensionen beweglich gelagert ist. Die Reibungsvorrichtung 5 könnte wie in der Ausführungsform gemäss Figur 19 beschrieben ausgestaltet sein.

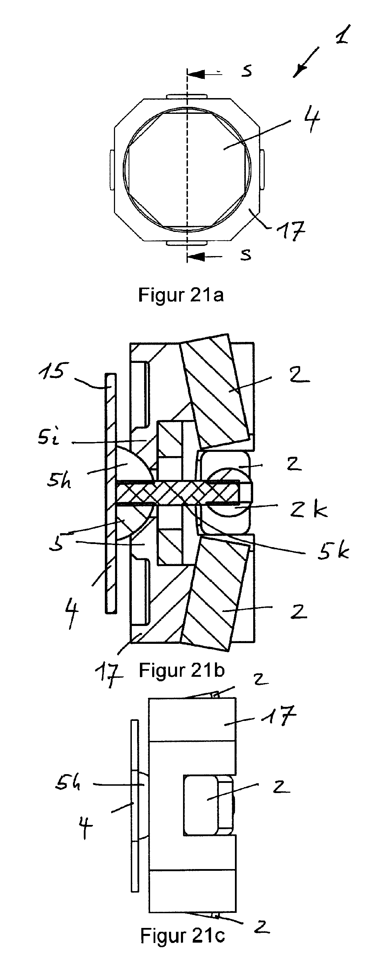

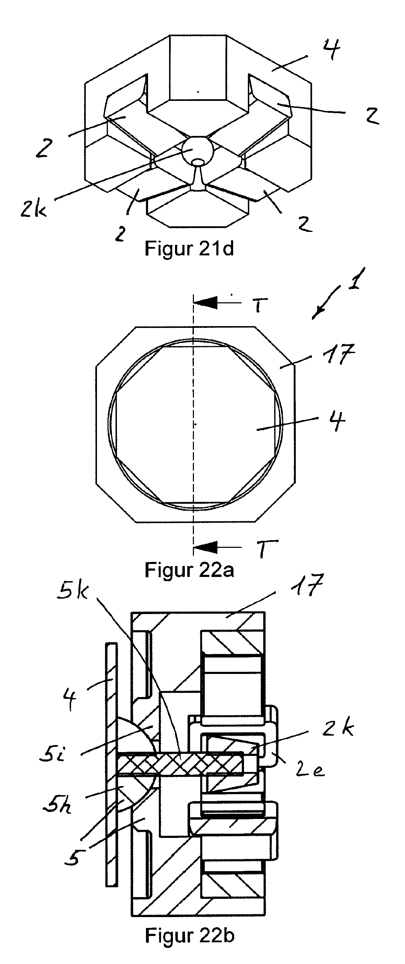

Die Figuren 21a bis 21d zeigen ein weiteres Ausführungsbeispiel einer Ablenkvorrichtung 1. Figur 21a zeigt in einer Draufsicht die Antriebsvorrichtung 1 mit Spiegel 4 und Basisteil 17. Figur 21b zeigt einen Längsschnitt entlang der Schnittlinie S-S. Das Schwenkteil 15 mit Spiegel 4 ist über ein halbkugelförmiges Teil 5h und einer entsprechenden Ausnehmung 5i schwenkbar im Basisteil 17 gelagert. Ein Anker 2k ist über ein Verbindungsteil 5k mit dem Teil 5h verbunden. Vier als Antriebsvorrichtungen 2 ausgestaltete Magnete sind um jeweils 90 Grad versetzt im Umfangsrichtung angeordnet, um den Anker 2k in einer X- und Y-Richtung zu bewegen, was eine Schwenkbewegung des Schwenkteils 15 zur Folge hat. Figur 21c zeigt eine Seitenansicht und Figur 21d eine perspektivische Ansicht von unten.

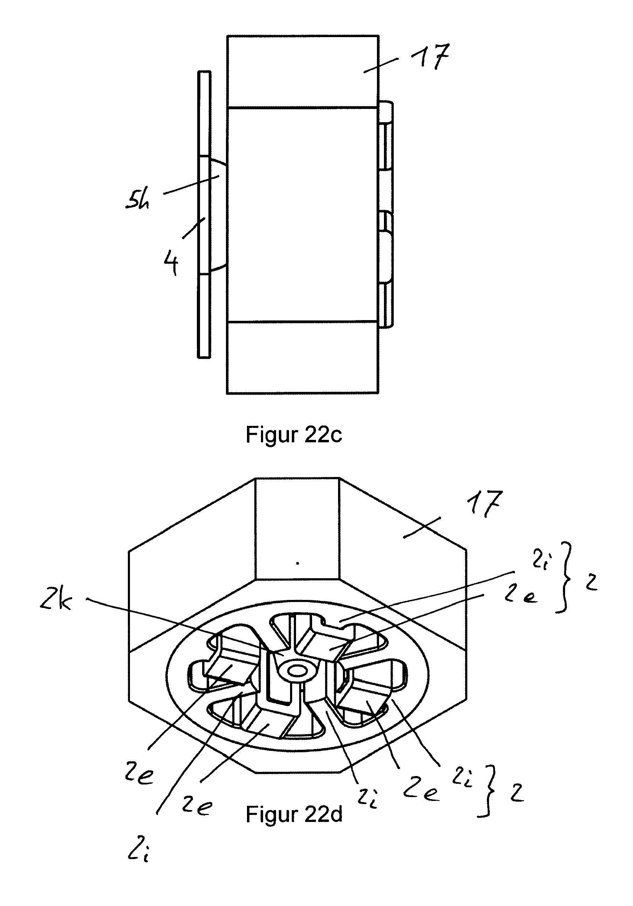

Die Figuren 22a bis 22d zeigen ein weiteres Ausführungsbeispiel einer Ablenkvorrichtung 1. Figur 22a zeigt in einer Draufsicht die Antriebsvorrichtung 1 mit Spiegel 4 und Basisteil 17. Figur 22b zeigt einen Längsschnitt entlang der Schnittlinie T-T. Das Schwenkteil 15 mit Spiegel 4 ist über ein halbkugelförmiges Teil 5h und einer entsprechenden Ausnehmung 5i schwenkbar im Basisteil 17 gelagert. Ein Anker 2k ist über ein Verbindungsteil 5k mit dem Teil 5h verbunden. Vier als Antriebsvorrichtungen 2 ausgestaltete Magnete 2 mit Spulen 2e und Magnetkern 2i sind um jeweils 90 Grad versetzt im Umfangsrichtung angeordnet, um den Anker 2k in einer X- und Y-Richtung zu bewegen, was eine Schwenkbewegung des Schwenkteils 15 zur Folge hat. Figur 22c zeigt eine Seitenansicht und Figur 22d eine perspektivische Ansicht von unten.

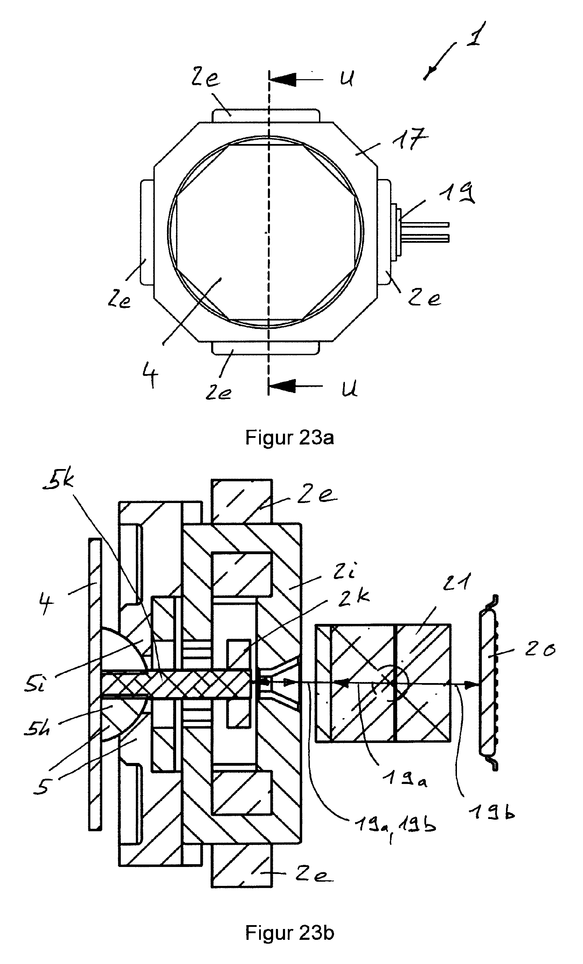

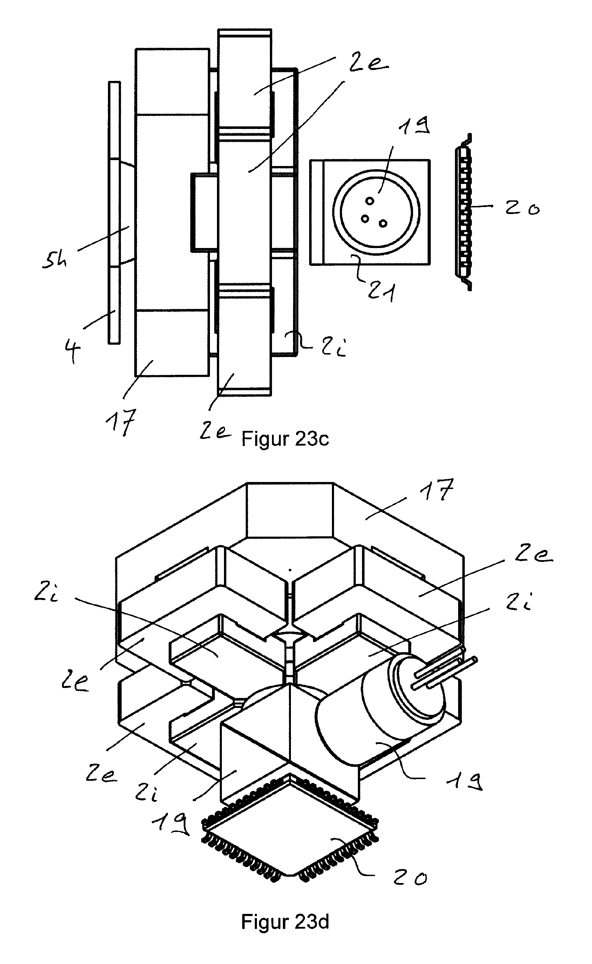

Die Figuren 23a bis 23d zeigen ein weiteres Ausführungsbeispiel einer Ablenkvorrichtung 1. Figur 23a zeigt in einer Draufsicht die Antriebsvorrichtung 1 mit Spiegel 4, Basisteil 17, Magnetspulen 2e und einer Lichtquelle oder einem Laser 19. Figur 22b zeigt einen Längsschnitt entlang der Schnittlinie U-U. Das Schwenkteil 15 mit Spiegel 4 ist über ein halbkugelförmiges Teil 5h und einer entsprechenden Ausnehmung 5i schwenkbar im Basisteil 17 gelagert. Ein Anker 2k ist über ein Verbindungsteil 5k mit dem Teil 5h verbunden. Vier als Antriebsvorrichtungen 2 ausgestaltete Magnete 2 mit Spulen 2e und Magnetkern 2i sind um jeweils 90 Grad versetzt im Umfangsrichtung angeordnet, um den Anker 2k in einer X- und Y-Richtung zu bewegen, was eine Schwenkbewegung des Schwenkteils 15 zur Folge hat. Rechts ist ein Strahlteiler 21 angeordnet, welcher den Laserstrahl der LED 19 als einfallender Strahl 19a der Stirnseite des Verbindungsteils 5k zuleitet, wo der Strahl reflektiert wird, und als reflektierter Strahl 19b einem zweidimensionalen Sensor 20, zum Beispiel einem CCD-Chip zugeleitet wird. Mit dieser Anordnung kann die Auslenkung des Verbindungsteils 5k und somit die Auslenkung des Spiegels 4 erfasst werden. Figur 23c zeigt eine Seitenansicht und Figur 23d eine perspektivische Ansicht von unten.

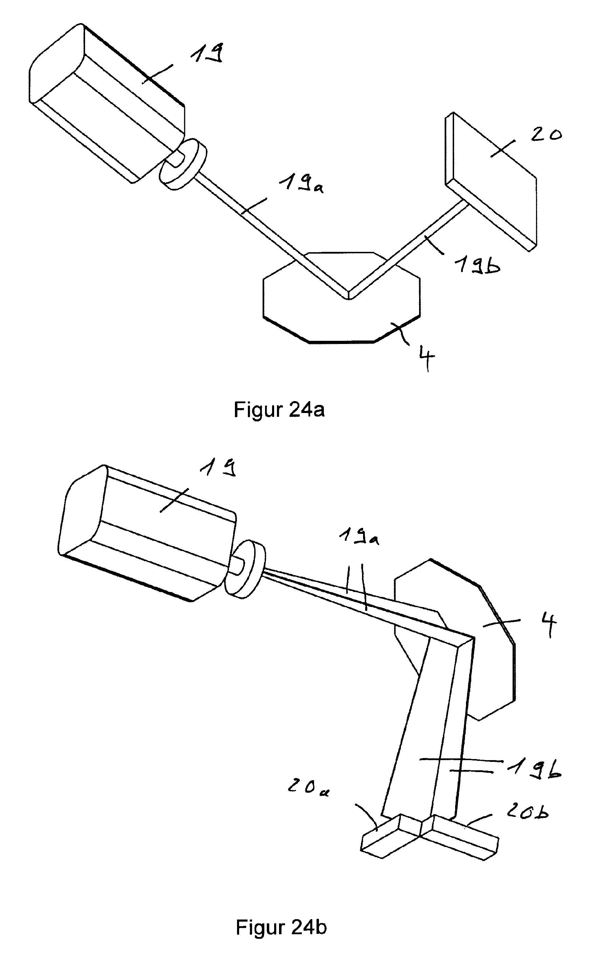

Figur 24a zeigt ein weiteres Ausführungsbeispiel die Auslenkung der Ablenkvorrichtung 4 beziehungsweise des Spiegels 4 zu erfassen. Ein Laser 19 erzeugt einen Laserstrahl 19a, welcher am Spiegel 4 reflektiert wird, wobei der reflektierte Laserstrahl 19b einem flächigen CCD-Sensor oder einem PSD (position sensitive device) zugeleitet wird. Bezüglich der Ablenkvorrichtung 4 können eine Vielzahl unterschiedlicher Stellen geeignet sein einen eintreffenden Laserstrahl 19a zu reflektieren, und den reflektierten Laserstrahl 19b einem Sensor 20 zuzuführen. Wie in Figur 23b dargestellt können auch weitere Komponenten, sie sich mit der Ablenkvorrichtung 4 bewegen, wie der Anker 2k, geeignet sein, um aus dem dadurch abgelenkten Laserstrahl 19a die genaue Auslenkung der Ablenkvorrichtung 4 zu verfassen.

Figur 24b zeigt ein weiteres Ausführungsbeispiel, das im Unterschied zu dem in Figur 24a dargestellten Ausführungsbeispiel ein Lasergerät 19 verwendet, das einen Laserstrahl 19a erzeugt, der linienförmige Laserstrahlen erzeugt, beispielsweise wie dargestellt zwei gegenseitig senkrecht verlaufende Linien beziehungsweise einen L-förmigen Laserstrahl, oder beispielsweise einen kreuzförmigen Laserstrahl. Wie in Figur 24b dargestellt trifft jede Linie des reflektierten Laserstrahls 19b auf einen linearen Sensor 20a, 20b auf. Die Sensoren 20a, 20b sind vorzugsweise gegenseitig um 90° versetzt angeordnet. Ein Vorteil des in Figur 24b dargestellten Ausführungsbeispieles ist die Tatsache, dass lineare Sensor 20a, 20b sehr kostengünstig und auch schnell bezüglich Signalerfassung sind, sodass diese Anordnung über die Reflexion eines Laserstrahls eine kostengünstige und insbesondere auch schnelle Erfassung der Lage eines Objektes, beispielsweise des Spiegels 4 ermöglicht. Der dargestellte L-förmige Laserstrahl kann bei einem 1-Achssystem aber auch nur ein Zeilenlaser sein, der nur auf einen einzelnen Zeilensensor projiziert wird.

Es gibt eine Vielzahl von Ausführungsformen um die Lage eines Objektes wie die Auslenkung des Spiegels 4 zu messen, sodass die in den Figuren 23a bis 24b offenbarten Ausführungsform nur eine aus einer Vielzahl von Möglichkeiten darstellt. Die Auslenkung des Spiegels kann auch, wie in den Figuren 1 bis 9 beschrieben, mit Hilfe der Antriebsvorrichtung 2 bestimmt werden.

## Patentansprüche

1. Ablenkvorrichtung (1) zum Ablenken einer elektromagnetischen Strahlung, insbesondere eines Laserstrahls, umfassend eine Antriebsvorrichtung (2), sowie umfassend eine Strahlablenkungsvorrichtung (4), insbesondere einen Spiegel (4), welche mit der Antriebsvorrichtung (2) derart angeordnet ist, dass die Antriebsvorrichtung (2) die Ausrichtung der Strahlablenkungsvorrichtung (4) bestimmt, sowie umfassend eine Reibungsvorrichtung (5), welche derart angeordnet und ausgestaltet ist, dass diese eine Haft- beziehungsweise eine Gleitreibung auf die beweglich gelagerte Strahlablenkungsvorrichtung (4) bewirkt, wobei die Antriebsvorrichtung (2) derart ausgestaltet ist, dass diese eine Antriebskraft zu erzeugen vermag, welches die Haftreibung überwindet, sowie umfassend eine Ansteuerungsvorrichtung (10) zur Ansteuerung der Antriebsvorrichtung (2).

2. Ablenkvorrichtung (1) nach Anspruch 1, **dadurch gekennzeichnet, dass** die Ansteuerungsvorrichtung (10) derart ausgestaltet ist, dass diese einen Startpuls (12a) von kürzer als 1 ms erzeugt, um die Antriebsvorrichtung (2) zu bewegen.

3. Ablenkvorrichtung (1) nach Anspruch 2, **dadurch gekennzeichnet, dass** die Ansteuerungsvorrichtung (10) zumindest einen Stopppuls (12b) erzeugt, um die Antriebsvorrichtung (2) abzubremsen.

4. Ablenkvorrichtung (1) nach Anspruch 2 oder 3, **dadurch gekennzeichnet, dass** die Ansteuerungsvorrichtung (10) zumindest 500 Start- und Stopppulse (12a,12b) pro Sekunde erzeugt.

5. Ablenkvorrichtung (1) nach Anspruch 1, umfassend einen Positionssensor (11) zum Erfassen der Ausrichtung der Strahlablenkungsvorrichtung (4) oder umfassend einen Anschlag (3b) zum definierten Ausrichten der Strahlablenkungsvorrichtung (4).

6. Ablenkvorrichtung (1) nach einem der vorhergehenden Ansprüche, **dadurch gekennzeichnet, dass** die Reibungsvorrichtung (5) derart angeordnet ist, dass diese direkt auf die Antriebsvorrichtung (2) einwirkt.

7. Ablenkvorrichtung (1) nach einem der Ansprüche 1 bis 5, **dadurch gekennzeichnet, dass** die Reibungsvorrichtung (5) zwischen der Antriebsvorrichtung (2) und der Strahlablenkungsvorrichtung (4) angeordnet ist.

8. Ablenkvorrichtung (1) nach Anspruch 7, **dadurch gekennzeichnet, dass** die Antriebsvorrichtung (2) einen Stator (2a) und einen bezüglich des Stators (2a) drehbar gelagerten Rotor (2b) aufweist, dass die Strahlablenkungsvorrichtung (4) über ein Verbindungsteil (3) mit dem Rotor (2b) verbunden ist, und dass die Reibungsvorrichtung (5) am Verbindungsteil (3) angreift.

9. Ablenkvorrichtung (1) nach Anspruch 8, **dadurch gekennzeichnet, dass** die Reibungsvorrichtung (5) zwei beabstandete Drähte (5a,5b) umfasst, dass das Verbindungsteil (3) einen zylinderförmigen Abschnitt (3d) umfasst, und dass die Drähte (5a,5b) beidseitig aussen am zylinderförmigen Abschnitt (3d) anliegen um derart eine Haft- oder Gleitreibung auf das Verbindungsteil (3) zu bewirken.

10. Ablenkvorrichtung (1) nach Anspruch 9, **dadurch gekennzeichnet, dass** die Reibungsvorrichtung (5) eine Spannvorrichtung (5f) umfasst, welche derart ausgestaltet ist, dass diese die auf das Verbindungsteil (3) bewirkte Anpresskraft der Drähte (5a,5b) einzustellen erlaubt.

11. Verfahren zum Ablenken einer elektromagnetischen Strahlung, insbesondere eines Laserstrahls, mit einer drehbar oder schwenkbar gelagerten Strahlablenkungsvorrichtung (4), insbesondere eines Spiegels (4), wobei die Strahlablenkungsvorrichtung (4) von einer Antriebsvorrichtung (2) angetrieben wird, **dadurch gekennzeichnet, dass** eine Haftbeziehungsweise Gleitreibung auf die Strahlablenkungsvorrichtung (4) bewirkt wird , dass die Antriebsvorrichtung (2) mit Hilfe eines Startpulses (12a) bewegt wird, dass insbesondere zumindest 500 Startpulse (12a) pro Sekunde erzeugt werden, und dass die Haft- und Gleitreibung, die Amplitude der Startpulse (12a) sowie die Zeitdauer zwischen zwei aufeinanderfolgenden Startpulsen (12a) derart gegenseitig angepasst sind, dass die Antriebsvorrichtung (2) sowie der Spiegel (4) zwischen zwei aufeinanderfolgenden Startpulsen (12a) zum Stillstand kommt.

12. Verfahren nach Anspruch 11, **dadurch gekennzeichnet, dass** der Startpuls (12a) kürzer als 1 ms ist.

13. Verfahren nach Anspruch 11 oder 12, **dadurch gekennzeichnet, dass** die Dauer des Stillstandes zumindest ein Drittel der Zeitdauer zwischen zwei aufeinanderfolgenden Startpulsen (12a) beträgt.

14. Verfahren nach Anspruch 11 oder 12, **dadurch gekennzeichnet, dass** nach dem Startpuls (12a) zumindest ein Stopppuls (12b) erzeugt wird.

15. Verfahren nach Anspruch 14, **dadurch gekennzeichnet, dass** nach dem Startpuls (12a) und dem Stopppuls (12b) ein weiterer Korrekturpuls (12c) erzeugt wird, welcher antreibend oder abbremsend auf die Antriebsvorrichtung (2) wirkt.

16. Verfahren nach einem der Ansprüche 10 bis 13, **dadurch gekennzeichnet, dass** die Pulsweite des Startpulses (12a), des Stopppulses (12b) oder des Korrekturpulses (12c) weniger als 500 µs beträgt.

17. Verfahren nach einem der Ansprüche 10 bis 14, **dadurch gekennzeichnet, dass** die Stromspitze des Startpulses (12a), des Stopppulses (12b) oder des Korrekturpulses (12c) zumindest das Zehnfache, vorzugsweise zumindest das Hundertfache des Nennstromes der Antriebsvorrichtung (2) beträgt.

18. Verfahren nach einem der Ansprüche 10 bis 15, **dadurch gekennzeichnet, dass** dem Spiegel eine Anfangs- und eine Endposition vorgegeben sind, und dass zumindest die Amplitude und/oder die Zeitdauer der Startpulse (12a) derart eingestellt wird, dass zur Bewegung zwischen Anfangs- und Endposition eine definierte Anzahl Startpulse (12a) erforderlich sind.

19. Verwendung eines Verfahrens nach einem der Ansprüche 11 bis 18 zum Betrieb eines gepulsten Lasers (13), wobei die Aktivierung des Laserstrahls und die Stellung des Spiegels (4) derart gegenseitig synchronisiert wird, dass der Laser bei stillstehendem Spiegel (4) aktiviert wird.
